# EUROPÄISCHE PATENTSCHRIFT

(11) **EP 3 481 888 B1**
(45) Veröffentlichungstag und Bekanntmachung des Hinweises auf die Patenterteilung: **29.03.2023**
(21) Anmeldenummer: 17735405.7
(22) Anmeldetag: 15.06.2017
(51) Int. Cl.: C08G 59/18, C09J 113/00, C09J 125/10, C09J 163/00, C09J 175/04, C09J 7/00

(54) **HÄRTBARE KLEBEMASSE UND DARAUF BASIERENDE REAKTIVKLEBEBÄNDER**
CURABLE ADHESIVE COMPOUND AND REACTIVE ADHESIVE TAPES BASED THEREON
MATIÈRE ADHÉSIVE DURCISSABLE ET RUBANS ADHÉSIFS RÉACTIFS À BASE DE LADITE MATIÈRE

(30) Priorität: 08.07.2016 DE 102016212508
(43) Veröffentlichungstag der Anmeldung: 15.05.2019
(73) Patentinhaber: TESA SE, 22848 Norderstedt (DE)
(72) Erfinder: BRODBECK, Markus, 72555 Metzingen (DE); FISCHER, Alexander, 22303 Hamburg (DE); KUPSKY, Marco, 25451 Quickborn (DE)
(74) Vertreter: tesa SE
(86) Internationale Anmeldenummer: PCT/EP2017/064717
(87) Internationale Veröffentlichungsnummer: WO 2018/007123

(56) Entgegenhaltungen:
- EP-A1- 0 625 558
- EP-A1- 2 653 492
- WO-A1-2009/060576
- US-A- 3 639 500

## Beschreibung

Die Erfindung betrifft eine thermisch härtbare, latentreaktive Klebemasse auf Epoxidbasis und damit erhältliche lagerfähige Klebebänder sowie eine Zubereitung zur Herstellung solcher Klebemassen.

### Hintergrund

Klebebänder werden heute in vielfältiger Form zum Beispiel als Hilfsmittel in Prozessen und zum Verbinden verschiedener Objekte verwendet. Selbstklebebänder, die Haftklebemassen enthalten, weisen dabei permanente Klebrigkeit auf. Sie können ohne weitere Härtung üblicherweise unmittelbar nach Verklebung ihre Verbindungsaufgabe ausüben. Mit solchen Selbstklebebändern sind mitunter sehr hohe Verklebungsfestigkeiten realisierbar. Trotzdem besteht in bestimmten Anwendungen der Bedarf nach Klebelösungen, die noch höhere Verklebungsfestigkeiten erlauben. Viele solcher Klebesysteme werden in einem Heißverpressschritt appliziert. Sie Schmelzen dann auf, benetzen den Verklebungsuntergrund und bauen während des Abkühlens durch Erstarrung Festigkeit auf. Solche Klebesysteme können zudem noch chemische Reaktivität aufweisen, wenn diesen Klebesystemen Reaktivsysteme zugesetzt sind, die miteinander reagieren und dadurch den Klebeverbund aushärten. US3639500A offenbart eine Dispersion umfassend Methanol als protisches Dispersionsmittel sowie darin dispergierte Basiskomponenten: ein carboxyliertes Butadien-Acrylonitril-Polymer als Matrixpolymer, ein Epoxid, einen latenten Vernetzter.

Unter dem Begriff "härtbare Klebemasse" ist im Sinne dieser Erfindung eine Zubereitung zu verstehen, die funktionelle Gruppen enthält, die durch Einwirkung einer Härterkomponente in Kombination mit erhöhter Temperatur als zusätzlichem Stimulus an einer Reaktion teilnehmen können, die zu einem Molmassenaufbau und/oder einer Quervernetzung zumindest eines Zubereitungsbestandteils führt.

Die Begriffe "Härter", "Initiator", "Aktivator" sind im Sinne dieser Erfindung synonym verwendet. Sie beschreiben Substanzen oder Substanzgemische, die eine Härtungsreaktion unter Beteiligung von Molekülen - insbesondere Makromolekülen - mit funktionellen Gruppen - wie beispielweise Epoxid-Funktionalitäten - nach Überschreiten einer Aktivierungstemperatur herbeiführen können. Bei der Härtungsreaktion kommt es in der Regel zu einer Verknüpfungs- oder einer Vernetzungsreaktion der funktionalisierten Moleküle mittels der Härtermoleküle.

Bei Reaktivklebebändern besteht der Bedarf, dass sich die Klebesysteme schnell verarbeiten lassen, und zwar insbesondere im Hinblick auf die Aktivierungsdauer für die Initiierung der Härtungsreaktion. Neben der Aktivierung soll auch die Aushärtung bis zum gewünschten Härtungsgrad schnell ablaufen. Ein besonders vorteilhaftes Reaktivsystem in diesem Zusammenhang basiert auf Epoxiden. Härtbare Epoxid-Klebesysteme sind in flüssiger und in Klebebandform hinlänglich bekannt und gehören zum Stand der Technik. Sie sind in vielfältiger Weise im Einsatz.

Härtbare Klebesysteme, die in Form von Klebebändern zum Einsatz kommen, enthalten in einer ihrer Realisierungsvarianten eine Filmbildnerkomponente -wobei es sich beispielsweise um ein thermoplastisches Polymer, ein Elastomer oder ein thermoplastisches Elastomer handeln kann - und eine Reaktivkomponente - beispielsweise bestehend aus einem epoxidbasierenden Reaktivharz - sowie einem Härtersystem (auch als Aktivatorsystem oder Initiatorsystem bezeichnet).

Durch die Verwendung der Filmbildnerkomponente und den damit verbundenen Herstellprozess - in Form von Lösen, Mischen, Beschichtung aus Lösemitteln oder Mischen, Dosieren, Extrusion als Hotmelt - wird diesen Reaktivklebebändern zumeist schon vor ihrem eigentlichen Einsatz in der Klebeanwendung thermische Energie zugeführt. Für reaktive Klebebänder auf Epoxid-Basis muss daher ein sogenanntes 'latentes' Härtersystem verwendet werden, welches durch die eingetragene thermische Energie im Klebeband- Herstellprozess (noch) nicht aktiviert wird. Dementsprechend ist man im Prozess üblicherweise auf Härtersysteme mit hohen Aktivierungsenergien beschränkt, da es hinsichtlich der zu wählenden Temperaturen nur bedingte Freiheitsgrade gibt.

Ein anderes Verarbeitungskonzept bieten Klebebandsysteme, bei welchem die Filmbildnerkomponente im Beschichtungsschritt bei Raumtemperatur erst aufgebaut wird, zum Beispiel durch eine Polyurethanvernetzung. Aber auch bezüglich solcher Systeme ist man prozessbedingt häufig eingeschränkt, beispielweise da die bei der Beschichtung erforderliche Kohäsion nicht besteht oder durch zusätzliche Additivierung erreicht werden muss.

Bei härtbaren Klebesystemen, die in Form von Reaktivklebebändern zum Einsatz kommen sollen, besteht zudem üblicherweise die Notwendigkeit, eine ausreichende Lagerstabilität unter Lagerbedingungen zu gewährleisten, so dass das Reaktivklebeband auf unkomplizierte Weise transportiert und bevorratet werden kann, bevor die eigentliche Reaktivität dann erst im Aktivierungsschritt und unter Aktivierungsbedingungen zu Tage tritt / treten soll. Ohne solche Latenz ist die Praktikabilität genannter Klebebänder eingeschränkt. Obwohl viele Epoxidsysteme sich mit entsprechendem Härter auch durch UV-Strahlung härten lassen, so sind thermische Härtungsverfahren in vielen industriellen Verklebungsprozessen bevorzugt, da Strahlungsquellen nicht immer in Fertigungslinien integrierbar sind. Zudem ist in Schattenbereichen befindliche Klebemasse mittels Strahlung nicht so leicht aktivierbar. Strahlungshärtung in komplizierten Klebefugegeometrien ist also nicht universell möglich.

### Epoxid-Klebebänder im Stand der Technik

Epoxidharze auf Basis von Glycidylethern werden in wirtschaftlich sinnvoller Weise zum Beispiel mit Polyaminen, Polyamiden oder Säureanhydriden gehärtet, vergleiche hierzu beispielweise die Schrift DE 695 13 309 T2. Für cycloaliphatische Epoxidharzysteme werden darüber hinaus auch kationische Vernetzungsmechanismen über sogenannte Supersäuren beschrieben.

US 20150240136 A1 beschreibt ein Reaktivklebeband auf Basis von Epoxiden und dem wohl bekanntesten Härtersystem Dicyandiamid (DICY). Dabei wird der pulverförmige, bei Raumtemperatur unlösliche Härter feinstverteilt in das Epoxidharz und die Filmbildnerkomponente eindispergiert. Bei Anlegen einer Verpresstemperatur löst sich der Härter DiCY im Epoxid, durchmischt sich und es kommt zur Amin-Epoxid-Reaktion. Um die dazu benötigte Löslichkeitstemperatur von 160 bis 200 °C herabzusetzen, wird ein Beschleuniger auf Basis einer Harnstoffverbindung hinzugegeben. Somit kann die Aktivierungstemperatur auf bis zu 140 °C gesenkt werden. Als Filmbildner werden Thermoplasten mit einem Erweichungsbereich von 60 bis 120 °C eingesetzt. Um solche Gemische in bahnförmigen Produkten - also als Klebebänder - anzubieten, muss das Gemisch in einem Lösemittel gelöst und homogenisiert werden. Im nachfolgenden Beschichtungsprozess wird das Lösemittel nach der Beschichtung abgedampft. Die genannte Schrift beschreibt zudem den ebenfalls möglichen Weg, das reaktive Klebeband über eine Schmelze bei 60 °C lösemittelfrei auszustreichen. Bei dieser Temperatur darf das eingesetzte Härter/Beschleuniger-System (DICY/UREA) jedoch nicht löslich sein.

Zur Aushärtung des Reaktivklebebands wird der Klebverbund bei 180 °C für 30 min im Umluftofen gelagert.

In der Schrift EP 1 028 151 B1 wird eine weitere Vernetzungsreaktion von Epoxiden in Klebebändern dargestellt. Der Härter ist ein in die Filmbildnerkomponente einpolymerisiertes Maleinsäureanhydrid. Zur Vernetzung von Epoxidharz und Maleinsäureanhydrid werden Temperaturen von 120 bis 180 °C bei 3 bis 30 min empfohlen, beispielhaft wird ein Verklebungsprozess von 160 °C, 10 min bei 6 bar angelegtem Pressdruck beschrieben.

### Latente Härtersysteme im Stand der Technik

Latente Härtersyteme für Epoxidvernetzung sind neben dem oben erwähnten DICY-System beispielweise Melamine, Polyamine, Polyamin-Epoxy-Addukte, DBA-Dihydrazine, Borontrifluorid-Amin-Complexe, Guanamine und Imidazole.

Die Schrift EP 2 653 492 A gibt eine Darstellung über Vor- und Nachteile solcher Systeme.

Die WO 2009/060576 A bezieht sich auf ein latentes Härtersystem basierend auf Polyamin-Addukten, speziell deren Herstellungsverfahren. Die sich damit ergebenden Härtersysteme können unlöslich in Epoxide eingearbeitet werden und starten ab einer Aktivierungstemperatur von 80 bis 130 °C die Vernetzung der Epoxidharze.

Die US 8,124,232 B2 beschreibt eine elektrisch leitfähige Epoxid-Paste zur Verklebung und elektrischen Kontaktierung von Bauteilen auf Leiterplatten. Als Härter werden unter anderem microverkapselte Polyaminaddukte genannt, die einem Schmelzbereich - entsprechend einem Aktivierungsbereich des Härters - von - 80 °C aufweisen..

Aus dem Stand der Technik resultieren also raumtemperaturlagerfähige Klebebänder auf Epoxidbasis mit hohen Anwendungstemperaturen und/oder langen Verarbeitungszeiten oder raumtemperaturlagerfähige Einkomponenten-Flüssigkleber bzw. Pasten auf Epoxidbasis mit für die jeweiligen Anwendungsgebiete vorteilhaften Verarbeitungstemperaturen und Zeiten. Als Beispiele für Härter für Epoxidsysteme, die in flüssigem Zustand oder in der Schmelze verarbeitet werden, sind beispielweise latentreaktive Diamine oder multifunktionelle Amine, Dicarbonsäuren oder multifunktionelle Carbonsäuren, difunktionelle Säureanhydride oder multifunktionelle Säureanhydride, primäre Dithiole oder multifunktionelle primäre Thiole genannt.

### Aufgabe der Erfindung

Es besteht Bedarf nach härtbaren Klebemassen für Reaktivklebebänder, die durch Aktivierung innerhalb von Sekunden bis wenigen Minuten bei relativ moderaten Temperaturen hohe Verklebungsfestigkeiten aufbauen können. Dabei soll das Härtersystem im härtbaren Klebeband eine solch stabile Latenz aufweisen, dass eine zeitlich sinnvolle Lagerfähigkeit bei mindestens Raumtemperatur gegeben ist.

Um diese sich entgegenstehenden Anforderungen optimal auszubalancieren, ist daher ein Klebesystem mit Reaktionsstart bei relativ niedrigen Temperaturen und damit Aufbau von Kohäsion und Netzwerkdichte bei gleichzeitig hoher Latenz zur Lagerfähigkeit bei Raumtemperatur gefordert.

Wünschenswert - wenn auch für die Erfindung nicht zwingend erforderlich - ist es zudem, wenn
im Aktivierungsschritt möglichst geringe Dickenänderungen des Klebebandes hervorgerufen werden, ohne dass aber unter den Kurzzeit-Verpressbedingungen Nachteile in Hinblick auf einen ausreichend hohen Vernetzungsgrad auftreten würden;
und wenn die Klebemassen, die dem Klebeband zugrunde liegen, ein sehr gutes Auffließverhalten aufweisen, um damit hohe Verklebungsfestigkeiten zu erlauben.

Wünschenswerte Vorteile sind zudem eine gute Widerstandsfähigkeit gegenüber Feucht/Wärme-Lagerung und eine ausgezeichnete Wärmefestigkeit unter den gegebenen Applikationsbedingungen, insbesondere nach Kurzzeit-Verpressen. Um den aktuellen und zukünftigen Anforderungen der Industrie an Umwelt und Sicherheitsvorgaben Stand zu halten, sollte das erfindungsgemäße Klebeband und die eingesetzten Rohstoffe den einschlägigen Vorgaben entsprechen.

### Lösung

Die erfindungsgemäße Aufgabe konnte gelöst werden, indem Reaktiv-Klebemassen aus einer Dispersion erzeugt werden, in der der Härter in zunächst inaktivierter Form vorliegt und bei moderaten Aktivierungstempertauren und/oder kurzen Aktivierungszeiten aktiviert werden kann. Ein erster Gegenstand der Erfindung sind dementsprechend derartige Dispersionen, so als in Anspruch 1 offenbart.

Die Erfindung betrifft somit eine Dispersion umfassend ein oder mehrere protische Lösemittel als Dispersionsmittel sowie umfassend die folgenden darin dispergierten Basiskomponenten:
- ein oder mehrere Filmbildner-Matrixpolymere, Matrixpolymere,
- ein oder mehrere epoxidgruppenhaltige Verbindungen (im weiteren auch als Epoxide oder Epoxidharze bezeichnet)
- zumindest eine Sorte einer zumindest in den Epoxiden, bevorzugt auch in den weiteren Bestandteilen der Dispersion nicht löslichen, modifizierten Verbindung des Polyamin-Addukt-Typs (Verbindungen des Polyamin-Addukt-Typs werden im Rahmen dieser Schrift auch als "Polyamin-Addukte" bezeichnet), wobei die zumindest eine Sorte des modifizierten Polyamin-Addukts in partikulärer Form vorliegt, und wobei zumindest 90 % der Partikel eine mittels Laserdiffraktometrie (Messung im Medium Luft an trockener Probe) bestimmte Partikelgröße im Bereich von 0,1 bis 10 µm aufweisen, wobei als zumindest eine Sorte einer modifizierten Verbindung des Polyamin-Addukt-Typs ausschließlich oder teilweise Polyamin-Epoxy-Addukt(e) und/oder Polyamin-Isocyanat-Addukt(e) (einschließlich Polyamin-Harnstoff-Addukt(e)) gewählt werden,
und wobei das zumindest eine modifizierte Polyamin-Addukt in partikulärer Form dispergiert ist.

Weiter vorteilhaft liegt auch die mittlere Partikelgröße (Messung mittels Lichtdiffraktometrie) der Polyamin-Addukt-Partikeln im Bereich von 0,1 bis 10 µm.

Das Polyamin-Addukt übernimmt beziehungsweise die Polyamin-Addukte übernehmen dabei (nach Aktivierung, siehe weiter im folgenden) die Funktion des Härters für die Epoxide. Dabei kann das Polyamin-Addukt der einzige vorliegende Härter sein beziehungsweise können die Polyamin-Addukte die einzigen vorliegenden Härter sein, es können aber auch noch Härter anderen Typs anwesend sein. Bevorzugt ist die Ausführung, bei der das/die Polyamin-Addukt(e) als einzige Härter vorliegen, also Härter anderen Typs nicht anwesend sind.

Die Gesamtheit der vorstehend genannten Basiskomponenten (Matrixpolymere, Epoxide und alle anwesenden Härter; aber ohne das beziehungsweise die Dispersionsmittel) wird im Rahmen dieser Schrift auch als Basiszusammensetzung bezeichnet, und zwar auch dann, wenn - wie im Falle diskret vorliegender dispergierter Komponenten - im eigentlich chemischen Wortsinne noch keine Zusammensetzung vorliegt.

Wie vorstehend ausgeführt, können als Basiskomponenten jeweils ein einziger Vertreter der genannten Stoffklassen oder mehrere Vertreter dieser stoffklasse gewählt werden; gleiches gilt für gegebenenfalls vorhandene Additive. Wenn diese Stoffklassen - Matrixpolymere, Härter, Epoxide und gegebenenfalls vorhandene Additive - im weiteren näher erläutert werden, wird aus sprachlichen Gründen jeweils in der Pluralform gesprochen - also beispielsweise von den Härtern - wobei jedoch selbstredend auch die Form umfasst wird, bei der nur ein Vertreter der entsprechenden Stoffklasse - beispielweise ein Härter - anwesend ist.

Als Polyamin-Addukt(e) werden Polyamin-Epoxy-Addukt(e) und/oder Polyamin-Isocyanat-Addukt(e) (einschließlich Polyamin-Harnstoff-Addukte) gewählt, wovon die Polyamin-Epoxy-Addukt(e) wiederum besonders bevorzugt sind.

Die Matrixpolymere übernehmen insbesondere die Funktion eines Filmbildners, als quasi eines Stützgerüsts für das Epoxy-Härter-System. Hierdurch können selbsttragende Filme aufgebaut werden, die auf einem permanenten Träger vorliegen können, die aber auch als - im verklebungszustand - trägerloser - insbesondere einschichtiger - Film eingesetzt werden können (sogenannte Transferklebebänder).

insbesondere wird als Dispersionsmittel zu mehr als 90 Gew.-% (bezogen auf die Gesamtheit der Dispersionsmittel), insbesondere ausschließlich (100 %), Wasser verwendet.

Die Erfindung betrifft in vorteilhafter Weise eine wässrige Dispersion.

Eine solche Zubereitung erlaubt es, die für den Klebestreifen erforderlichen Bestandteile in Form eines Einkomponenten-Systems (hier verstanden in Bezug auf die Darreichungsform als eine einzige Zubereitung, nicht auf die darin enthaltenen Bestandteile) bereitzustellen.

Bei den Härtern des erfindungsgemäßen Systems handelt es sich zumindest teilweise, bevorzugt vollständig um zumindest ein Polyamin-Addukt, insbesondere zumindest ein Polyamin-Epoxy-Addukt. Die Härter werden in modifizierter Form eingesetzt, und zwar derart, dass die Modifikation zum einen - falls nicht bereits inhärente Eigenschaft des betreffenden Polyamin-Addukts - die Unlöslichkeit in den Epoxiden bewirkt, insbesondere in allen anderen Komponenten der Dispersion, so dass die Polyamin-Addukte in partikulärer Form dispergiert in dem Dispersionsmittel werden können, ohne sich mit den anderen Komponenten zu vermischen. Zum anderen bewirkt die Modifikation eine Hemmung der Reaktivität der Härter im nicht aktivierten Zustand, so dass die dispergierte Härter nicht unmittelbar in der Dispersion oder in getrocknetem Zustand nach Ausstreichung als Schicht mit den ebenfalls vorhandenen Epoxiden reagieren.

Erst durch Aktivierung werden die reaktiven Polyamin-Addukte freigesetzt beziehungsweise in eine für die Epoxide reaktive Form überführt, so dass die Aushärtungsreaktion stattfinden kann. Sind mehrere Härter dieser Art (insbesondere mehrere Polyamin-Addukte) vorhanden, so ist es grundsätzlich auch möglich, dass diese bei unterschiedlichen Aktivierungsbedingungen (insbesondere bei unterschiedlichen Aktivierungstemperaturen) aktiviert werden, so dass eine stufenweise Härtung erfolgt.

Die Modifizierung der Härtersubstanzen, also deren Passivierung, kann insbesondere durch Blockierung der für die Härtungsreaktion relevanten funktionellen Gruppen des jeweiligen Härters geschehen. Hier können beispielsweise physikalische Blockierungen (insbesondere durch Einführung sterisch hindernder Blockierungsgruppen oder Abschirmung) und/oder chemische Blockierungen (insbesondere durch Einführung reversibler Schutzgruppen) in Frage kommen.

In vorteilhafter Weise liegt das zumindest eine modifizierte Polyamin-Addukt, insbesondere das zumindest eine modifizierte Polyamin-Epoxy-Addukt, in Form partikulärer Mikrokapseln vor.

Gegenstand der Erfindung sind weiterhin Klebemassenschichten, erhältlich durch Beschichtung der erfindungsgemäßen Dispersion in ihrer Grundform oder in einer ihrer vorteilhaften Ausführungsformen auf einen temporären - also für die Anwendung wieder entfernbaren - oder einen permanenten - also bei der Anwendung im Klebeprodukt verbleibenden - Träger und anschließende Trocknung, insbesondere bis zu einem Restdispersionsmittelgehalt von nicht mehr als 5 Gew.-%, bezogen auf die Klebmassenschicht. Die Trocknungstemperatur liegt dabei vorteilhaft unterhalb der Aktivierungstemperatur (beziehungsweise der niedrigsten Aktivierungstemperatur der mehreren Härter bei unterschiedlichen Aktivierungstemperaturen), damit ein latentreaktives Klebeband entsteht, in dem die Härtungsreaktion noch nicht eingesetzt hat. Der einzuhaltende Temperaturunterschied, der ein Einsetzen der Aktivierung bei der Trocknung vermeidet, hängt dabei von den Prozessparametern ab, häufig hat es sich bewährt, wenn die Trocknungstemperatur mindestens 20 °C niedriger als die (niedrigste) Aktivierungstemperatur liegt.

In einem solchen latentreaktiven Klebeband liegen die Härter weiterhin in ihrer modifizierten (passivierten) Form vor. Erst zum Zwecke des Einsatzes wird der Härter bzw. werden die Härter aktiviert.

In einer vorteilhaften Ausführungsform der Erfindung ist die Basiszusammensetzung derart, dass die Basiskomponenten zu folgenden Anteilen in der Dispersion vorliegen:
(A) 48 bis 98,5 Gew.-% an Matrixpolymer(en),
(B) 1 bis 44 Gew.-% an Epoxid(en),
(C) 0,5 bis 8 Gew.-% an Polyamin-Addukt(en).

Die Gewichtsanteile sind dabei auf die Basiszusammensetzung - also die Gesamtheit der Basiskomponenten - bezogen. Die Dispersion kann auf diese Basiskomponenten beschränkt sein, also keine weiteren Bestandteile aufweisen; erfindungsgemäß und vorteilhaft können aber weitere Komponenten anwesend sein, die dann additiv zu der Gesamtheit der Basiszusammensetzung zu rechnen sind.

In bevorzugter Weise werden die eingesetzten Härtermengen dabei auf die vorliegenden Epoxidmengen abgestimmt, um einen optimalen Verlauf und Erfolg der Härtungsreaktion - insbesondere hinsichtlich der Anforderungen an das schlussendliche Klebeprodukt - zu bewirken. Besonders bevorzugt liegt das Verhältnis der zur Härtungsreaktion befähigten Epoxidgruppen zu den funktionellen Gruppen der Härter stöchiometrisch zwischen 1 zu 0,3 und 1 zu 1,5, bevorzugt zwischen 1: 0,5 und 1 zu 0,9, zum Beispiel bei 1 : 1. Hierbei wird sich auf das aus den tatsächlich eingesetzten Mengen theoretisch ergebende Verhältnis bezogen.

Mit den erfindungsgemäßen beschriebenen Dispersionen ist es gelungen, latentreaktive Klebebänder zu erzeugen, die zumindest eine, gegebenenfalls - je nach Ausführung - zwei, drei oder sogar alle der folgenden Bedingungen erfüllen:
- gute Eignung für das in dieser Schrift als grundsätzlich dargestellte Aufgabenfeld;
- hohe Verklebungsfestigkeiten, entsprechend einer Ausstoßfestigkeit nach Test A von mindestens 1,5 N/mm², bevorzugt von mindestens 2,5 N/mm², sehr bevorzugt von mindestens 3,5 N/mm² erlauben
- gute Widerstandsfähigkeit gegenüber Feucht/Wärme-Lagerung von mindestens 1,3 N/mm², bevorzugt mindestens 2,1 N/mm², sehr bevorzugt mindestens 3,5 N/mm² (gemessen nach Test B)
- gute Verklebungsfestigkeit bei 80 °C, insbesondere von mindestens 0,4 N/mm², bevorzugt mindestens 0,8 N/mm², sehr bevorzugt mindestens 1,0 N/mm², gemessen nach Test C,
- gute Verklebungsfestigkeit nach Kurzzeitlagerung, insbesondere von mindestens 0,4 N/mm², bevorzugt mindestens 0,8 N/mm², sehr bevorzugt mindestens 1,0 N/mm², gemessen nach Test D.
- die Abwesenheit oder geringstmögliche Anwesenheit von umweltkritischen und gesundheitskritischen Substanzen; insbesondere (im Wesentlichen) keine in der REACH-Verordnung als SVHC gelisteten Substanzen (Substances of Very High Concern), (im Wesentlichen) keine flüchtigen organischen Verbindungen (VOC; volatile organic compounds); (im Wesentlichen) keine Halogene, (im Wesentlichen) keine in der EU-Richtlinie 2011/65/EU (RoHS) als kritisch angesehene Substanzen, und/oder (im Wesentlichen) keine andere Gefahrstoffe enthaltend.

### Dispersionsmittel

Die Zubereitung zur Erzeugung eines latentreaktiven Klebefilms liegt erfindungsgemäß in Form einer Dispersion vor. Die einzelnen Basis- und gegebenenfalls Zusatzkomponenten sind in einem Dispersionsmittel oder einer Mischung mehrerer Dispersionsmittel dispergiert. Erfindungsgemäß erlaubt die Darreichung als Dispersion, die einzelnen Komponenten - insbesondere auch die Epoxidkomponente in Gegenwart der modifizierten Härter - zusammenzuführen und als Film auszustreichen, ohne dass es bereits zum Eintreten einer Härtungsreaktion kommt.

Das Dispersionsmittel, oder - bei Anwesenheit mehrerer Dispersionsmittel beziehungsweise einer Dispersionmittelmischung - die Dispersionsmittel (im Folgenden als "die Dispersionsmittel" bezeichnet, auch den Fall eines einzigen Dispersionsmittel umfassend), werden besonders bevorzugt derart gewählt, dass sie bei Temperaturen unterhalb der (niedrigsten) Aktivierungstemperatur der Härter ganz oder zumindest weitgehend aus dem System entfernt werden können, insbesondere nachdem die Dispersion als Film beziehungsweise als Schicht ausgestrichen wurde. Dies kann geschehen, indem Dispersionsmittel gewählt werden, die bereits in Temperaturbereichen unterhalb der (niedrigsten) Aktivierungstemperatur der Härter in hohem Maße verdampfen, beziehungsweise sich durch geeignete Wahl der Umgebungsbedingungen (insbesondere Druck und Temperatur) in solchen Temperaturbereichen verdampfen lassen.

Im Sonderfall der Erfindung können bei Anwesenheit mehrerer Härter auch Trocknungstemperaturen gewählt werden, die oberhalb der Aktivierungstemperaturen eines oder mehrerer der Härter liegen, wenn während des Trocknungsvorgangs bereits eine Teilhärtung stattfinden soll. Der wesentliche Teil der Härtungsreaktion wird aber auch in diesem Fall grundsätzlich nach der Applizierung zwischen die zu verklebenden Substrate geschehen, so dass unmittelbar nach der Trocknung jedenfalls wesentliche Mengen nicht reagierten Härters im System vorliegen, insbesondere von solchen Härtern, deren Aktivierungstemperatur oberhalb der Trocknungstemperatur liegt.

Für die teilweise Vorhärtung können beispielweise gering reaktive Härter eingesetzt werden.

Als Dispersionsmittel werden üblicherweise solche flüssigen Substanzen gewählt, die für andere Stoffe auch als Lösemittel eingesetzt werden können. Die Verwendung als Lösemittel ist sogar der häufigere Verwendungszweck für solche Substanzen. Daher sind die entsprechenden Flüssigkeiten im Stand der Technik üblicherweise als Lösemittel bezeichnet. Sofern im Weiteren der Begriff "Lösemittel" verwendet wird, greift dies auf eine solche allgemeine Bezeichnung zurück und soll nicht bedeuten, dass die entsprechende Flüssigkeit im Rahmen der vorliegend beschriebenen Dispersionen neben der Dispergierwirkung etwa auch eine Lösungswirkung auf einzelne oder alle Bestandteile der Dispersion hätte, sofern dies nicht im Einzelnen konkret anders dargestellt wird.

Grundsätzlich ist es möglich, als Dispersionsmittel solche Lösemittel zu wählen, in dem sich außer der Härterkomponente alle anderen oder zumindest ein Teil der anderen Komponenten lösen, während die Härterkomponente hierin unlöslich ist und dispergiert vorliegt. Als Dispersionsmittel nicht bevorzugte Lösemittel sind aprotisch-polare Lösungsmittel. Aprotischeunpolare Lösemittel - wie beispielweise Benzin, Hexan oder Toluol - erfüllen diese Anforderungen besser und werden den aprotisch-polaren Lösemitteln daher bevorzugt.

Erfindungsgemäß ist es aber von besonderem Vorteil, möglichst viele, bevorzugt sogar alle Bestandteile der Zubereitung zu dispergieren und nicht zu lösen. Hieraus lassen sich besonders gut latentreaktive Klebefilme mit den geforderten Eigenschaften erzielen. Die Dispersionsmittel sind daher insbesondere derart zu wählen, dass sich darin nur ein geringer Teil, bevorzugt keine der dispergierten Komponenten lösen. Möglichst sollen die gewählten Dispersionsmittel auch nicht als Lösungsvermittler der Komponenten untereinander wirken (die gewählten Dispersionsmittel sollen somit bevorzugt nicht fördern, dass eine oder mehrere der Komponenten sich in einer oder mehreren der anderen Komponenten lösen würden).

Als erfindungsgemäß sehr bevorzugt zur Erzeugung der erfindungsgemäßen Dispersion haben sich protische Lösemittel - wie beispielweise Alkohole, Carbonsäuren und dergleichen - gezeigt, da diese wenige oder sogar keine der eingesetzten Komponenten lösen. Diese können erfindungsgemäß als alleiniges Dispersionsmittel oder als Dispersionsmittel in einer Mischung mit weiteren, insbesondere ebenfalls protischen Dispersionsmitteln eingesetzt werden. Allerdings zeigen eine Vielzahl protischer Lösemittel die Neigung, mit Bestandteilen der erfindungsgemäßen Zubereitung - wie etwa den Epoxiden - zu wechselwirken und/oder zu reagieren.

Das am meisten bevorzugte Dispersionsmittel ist daher Wasser, entweder - als sehr bevorzugte Vorgehensweise - als alleiniges Dispersionsmittel, oder in Mischung mit einem oder mehreren anderen, insbesondere ebenfalls protischen Dispersionsmitteln.

Wird als Dispersionsmittel eine Mischung aus Wasser und einem oder mehreren anderen - insbesondere protischen - Dispersionsmitteln eingesetzt, so beträgt der Wasseranteil dieser Dispersionsmittel-Mischung bevorzugt 90 Gew.-% oder mehr.

Der Anteil an Dispersionsmittel(n) in der Dispersion - also das Verhältnis von Dispersionsmitteln zu dispergierten Komponenten - kann grundsätzlich frei gewählt und den Wünschen in Hinblick auf die Verarbeitungsbedingungen angepasst werden.

insbesondere in Hinblick auf eine günstige Viskosität zur Beschichtung auf temporären oder permanenten Trägern bei der Erzeugung von Klebefilmen hat es sich als vorteilhaft herausgestellt, wenn der Anteil an Dispersionsmitteln in der Dispersion zwischen 20 und 90 Gew.-%, bevorzugt zwischen 40 und 75 Gew.-% liegt.

Falls gewünscht, kann die Dispersion vor der Beschichtung zur Erzeugung des Klebefilms auf ein gewünschtes Feststoff-Dispersionsmittel-Verhältnis - und damit eine gewünschte Viskosität - aufkonzentriert - oder gegebenenfalls auch verdünnt - werden, um die Verarbeitungsbedingungen zu optimieren, beispielweise in Hinblick auf die Gleichmäßigkeit der zu erzeugenden Schicht. Auch der Zusatz von Verdickungsmitteln (auch als "Verdicker" bezeichnet) kann genutzt werden, um die Viskosität der Dispersion einzustellen. Es hat sich als günstig herausgestellt, insbesondere zur Ausstreichung auf einen Träger, wenn die Dispersion auf einen joghurtartig-thixotropen Zustand eingeregelt wird.

Erfindungsgemäße Dispersionen aus den jeweiligen Bestandteilen können dabei durch die verschiedene Polymerisationsverfahren nach dem Stand der Technik hergestellt werden (beispielsweise durch Emulsionspolymerisation, Suspensionspolymerisation, auch Herstellung und Vermischung von diskreten Dispersionen einzelner oder jeweils mehrerer der Bestandteile). Polymerdispersionen lassen sich beispielsweise durch Dispergieren des Polymeren herstellen, durch Dispersion von Vorstufen des Polymere (Prepolymere) oder auch durch Einbringen der zugrundeliegenden Monomere in das Dispersionsmittel und anschließende Polymerisierung in Dispersion. Dispersionen von Polymeren sind jedoch auch in vielfältiger Art und von unterschiedlichen Polymeren unterschiedlicher Hersteller auf dem Markt erhältlich und können als Grundlage für die erfindungsgemäße Dispersion verwendet werden.

### Filmbildner / Matrixpolymere

Die erfindungsgemäßen Klebstofffilme bestehen grundsätzlich aus einer Matrix, die nachfolgend auch polymere Filmbildner-Matrix genannt wird, in der die reaktiven Komponenten
- Epoxide und Härter - enthalten sind. Aufgabe dieser Matrix ist es, ein - insbesondere inertes
- Grundgerüst für die übrigen Bestandteile des latentreaktiven Klebefilms zu bilden, so dass diese nicht flüssig vorliegen, sondern in einem Film oder einer Folie eingelagert sind.

Inert bedeutet in diesem Zusammenhang, dass die reaktiven Monomere und/oder Reaktivharze unter geeignet gewählten Bedingungen (z. B. bei ausreichend geringen Temperaturen) im Wesentlichen nicht mit der polymeren Filmbildner-Matrix reagieren.

In der erfindungsgemäßen Dispersion zur Herstellung des latentreaktiven Klebefilm liegen ein oder mehrere Matrixpolymere, auch als Filmbildner oder Filmbildner-Polymere bezeichnet, in dispergierter Form vor.

Als Matrixpolymer-Komponente können grundsätzlich Homopolymere, Copolymere, Mischungen aus Homopolymeren, Mischungen aus Copolymeren und Mischungen aus Homopolymeren mit Copolymeren eingesetzt werden.

Als Matrixpolymere für erfindungsgemäße reaktive Klebemassen sind insbesondere thermoplastische Materialien, Elastomere und thermoplastische Elastomere geeignet.

In bevorzugte Weise werden als Matrixpolymere solche Polymere gewählt, deren jeweiliger Erweichungspunkt im Bereich von 40 bis 120 °C, insbesondere im Bereich von 50 bis 100 °C liegt. Erweichungspunkte werden dabei gemäß ASTM E28-14 bestimmt.

Beispiele geeigneter thermoplastischer Polymere sind semikristalline Polyolefine und EthylenVinylacetat-Copolymere (EVA). Bevorzugte Polyolefine werden aus Ethylen, Propylen, Butylen und/oder Hexylen hergestellt, wobei jeweils die reinen Monomere polymerisiert werden können oder Mischungen aus den genannten Monomeren copolymerisiert werden. Sehr vorteilhaft sind Elastomere als Matrixpolymere einsetzbar. Beispielhaft seien Kautschuk oder Synthesekautschuk als Ausgangsmaterial für die Klebemassen genannt. In wässriger Form als Latex bekannt. Hier sind vielfältige Variationsmöglichkeiten gegeben, sei es für Kautschuke aus der Gruppe der Naturkautschuke oder der Synthesekautschuke oder sei es aus einem beliebigen Verschnitt aus Naturkautschuken und/oder Synthesekautschuken.

Sehr vorteilhaft sind wässrige Dispersionen von Nitrilkautschuken (Litex^{®}), insbesondere heißpolymerisierte, und solche mit einem Acrylnitril-Gehalt zwischen 15 % und 50 %, bevorzugt zwischen 30 % und 45 % sowie einer Mooney-Viskosität (ML 1+4, 100 °C; DIN 53523) zwischen 30 und 110, bevorzugt zwischen 60 und 90. Außerdem vorteilhaft sind wässrige Dispersionen thermoplastischer Elastomere und hier insbesondere Block-, Stern- und/oder Pfropfcopolymere. Spezifische Beispiele sind Styrol-Butadien-Blockcopolymere (SBS), Styrol-Isopren-Blockcopolymere (SIS), Styrol-(Isopren/Butadien)-Blockcopolymere (SIBS) und (teil)hydrierte Varianten wie Styrol-(Ethylen/Butylen)-Blockcopolymere (SEBS), Styrol-(Ethylen/Propylen)-Blockcopolymere (SEPS, SEEPS), Styrol-(Butylen/Butyl)-Blockcopolymere (SBBS), Styrol-iso-Butylen-Blockcopolymere (SiBS) und Polymethylmethacrylat-Polyacrylat-Blockcopolymere. Diese Blockcopolymere können als lineare oder mehrarmige Struktur eingesetzt werden, als Diblockcopolymer, Triblockcopolymer oder Multiblockcopolymer sowie als Gemische verschiedener Arten.

Weitere vorteilhafte Beispiele für thermoplastische Elastomere sind thermoplastische Polyurethane (TPU). Diese Polymere lassen sich erfindungsgemäß hervorragend als Matrixpolymer einsetzen. Dabei kann ein einzelnes thermoplastisches Polyurethan als ausschließliches Matrixpolymer verwendet werden, es können eine Mischung zweier oder mehrerer thermoplastischer Polyurethane eingesetzt werden, oder es kann eine Mischung eines oder mehrerer thermoplastischer Polyurethane mit einem oder mehreren anderen Matrixpolymeren eingesetzt werden.

Polyurethane sind chemisch und/oder physikalisch vernetzte Polymere, die typischerweise aus Polyolen und Isocyanaten aufgebaut werden und Weich- und Hartsegmente enthalten. Die Weichsegmente bestehen beispielsweise aus Polyestern, Polyethern, Polycarbonaten, im Sinne dieser Erfindung jeweils bevorzugt aliphatischer Natur, und Polyisocyanathartsegmenten. Je nach Art und Einsatzverhältnis der einzelnen Komponenten sind Materialien erhältlich, die im Sinne dieser Erfindung vorteilhaft eingesetzt werden können. Weiterhin sind Polyolefin-basierte thermoplastische Elastomere, Polyetheresterelastomere, Polyamide wie Polyesteramide, Polyetheresteramide, Polycarbonatesteramide und Polyetherblockamide als thermoplastische Elastomere aus wässriger Dispersion für Matrixpolymere (A) einsetzbar.

Die Matrixpolymere werden insbesondere so ausgewählt, dass sie in Kombination mit den weiteren Formulierungsbestandteilen solche Klebemassen zugänglich machen, die vorteilhaft sind im Hinblick auf Verarbeitbarkeit beim Klebebandhersteller einerseits und Klebebandanwender andererseits. Dies gilt insbesondere im Hinblick auf klebtechnische Eigenschaften und im Hinblick auf weitere Verbesserung der Dimensionsstabilität der Klebefilme in Bezug auf die Darreichung des Klebeprodukts und das Ausquetschverhalten im Heißlaminierprozess, um nur einige besonders wichtige Anforderungen zu nennen.

### Epoxide

Erfindungsgemäße Klebemassen enthalten zumindest eine Sorte einer epoxidgruppenhaltigen Verbindung (im Rahmen dieser Schrift auch als "Epoxid" oder "Epoxidharz" bezeichnet).

In einer sehr bevorzugten Weise werden als Epoxide eine oder mehrere epoxidgruppenhaltige Verbindung(en) gewählt, die ein Epoxid-Äquivalent (EE) von 150 bis 1.500 g/mol besitzen, weiter bevorzugt von 170 bis 700 g/mol..

Das Epoxid-Äquivalent ist dabei entsprechend der Definition in DIN EN ISO 3001:1999-11 (insbesondere dort 2.1: Epoxid-Äquivalent) derart definiert, dass es der Masse an oligomerer oder polymerer epoxidgruppenhaltigen Verbindung in Gramm entspricht, welche 1 Mol der Epoxidgruppe enthält.

Die Definition für Epoxid-Äquivalent in dieser Schrift wird dementsprechend für alle oligomeren und polymeren epoxidgruppenhaltigen Verbindungen - im Sinne des Begriffs "Harz", wie er in der DIN EN ISO 3001:1999-11 genannt ist -verwendet.

Enthalten mehrere oligomeren und polymeren Verbindungen Epoxidgruppen, so kann entsprechend das Epoxid-Äquivalent für die Mischung aus den oligomeren und polymeren epoxidgruppenhaltigen Verbindungen als Ganzes angegeben werden, indem die Masse in Gramm der Mischung epoxidgruppenhaltigen Verbindungen angegeben wird, welche 1 Mol der Epoxidgruppen enthält.

Die Angabe zum Epoxid-Äquivalent erfolgt in g/mol [Gramm oligomerer beziehungsweise polymerer epoxidgruppenhaltigen Verbindung(en) / mol Epoxidgruppen].

Es ist von Vorteil für die weitere Verarbeitung der Dispersion zum Klebefilm, Viskosität und Kohäsion aufeinander abzustimmen. Dies kann beispielsweise dadurch geschehen, dass zumindest zwei Epoxidharze eingesetzt werden, von denen eines auf kurzen Makromolekülen und eines auf langen Makromolekülen basiert, und/oder wenn das eine Epoxidharz flüssig und das andere Epoxidharz fest oder zumindest semifest ist.

Das Zusammenspiel zwischen Reaktivität der Epoxidharze, deren Kettenlänge und/oder deren Aggregatzustand spiegelt unter anderem das Epoxid-Equivalenzgewicht wider. Erfindungsgemäß ist es daher von Vorteil, wenn als Epoxide zumindest zwei epoxidgruppenhaltige Verbindungen eingesetzt werden, und zwar i) zumindest eine epoxidgruppenhaltige Verbindung mit einem Epoxid-Äquivalent (EE) von 150 bis 225 g/mol und zumindest eine epoxidgruppenhaltige Verbindung mit einem Epoxid-Äquivalent (EE) von 230 bis 400 g/mol, oder ii) zumindest eine epoxidgruppenhaltige Verbindung mit einem Epoxid-Äquivalent (EE) von 150 bis 225 g/mol und zumindest eine epoxidgruppenhaltige Verbindung mit einem Epoxid-Äquivalent (EE) von 400 bis 1.500 g/mol, oder iii) zumindest eine epoxidgruppenhaltige Verbindung mit einem Epoxid-Äquivalent (EE) von 230 bis 400 g/mol und zumindest eine epoxidgruppenhaltige Verbindung mit einem Epoxid-Äquivalent (EE) von 400 bis 1.500 g/mol, oder iv) zumindest eine epoxidgruppenhaltige Verbindung mit einem Epoxid-Äquivalent (EE) von 150 bis 225 g/mol und zumindest eine epoxidgruppenhaltige Verbindung mit einem Epoxid-Äquivalent (EE) von 230 bis 400 g/mol und zumindest eine epoxidgruppenhaltige Verbindung mit einem Epoxid-Äquivalent (EE) von 400 bis 1.500 g/mol.

Beispiele von Epoxidharzen, die als Reaktivharze zur Verwendung in der vorliegenden Erfindung einzusetzen sind, sind Polyglycidylether auf Basis von Polyphenolen, wie Bisphenol A, Bisphenol F, Catachol, Resorcin, etc. oder Polyalkoholen wie Glycerin, Polyethylenglycol, etc. und Epichlorhydrin erhalten werden. Ebenso Glycidyletherester, die durch Umsetzten von Hydroxycarbonsäuren und Epichlorhydrin erhalten werden. Sodann Polyglycidylester, die durch Umsetzen von Polycarbonsäuren, wie Phtalsäure oder Terephtalsäure und Epichlorhydrin erhalten werden. Epoxidierte Phenol-Novolack-Harze, epoxidierte Cresol-Novolak-Harze, epoxidierte Polyolefine, alicyclische Epoxydharze und andere modifizierte Epoxydharze sowie Mischungen oder wässrige Dispersionen von Epoxidharzen sind ebenfalls für die erfindungsgemäße Klebmasse verwendbar. Die vorliegende Erfindung ist jedoch nicht auf diese beschränkt.

Für die erfindungsgemäßen speziellen Klebemassen werden in bevorzugter Weise Epoxidharze mit einen sehr niedrigen Halogengehalt (< 1000 ppm, bevorzugt sogar < 100 ppm; alle Angaben zu Halogengehalten bezogen auf die Bestimmung mittels ionenchromatographie nach EN 14582:2007), insbesondere bezogen auf Chlor und Brom, verwendet.

### Härter

Erfindungsgemäße Klebemassen enthalten zumindest eine Sorte eines Härters. Die Härter werden so ausgewählt, dass die resultierende Formulierung eine möglichst ausgeprägte Latenz in ihrer Reaktivität aufweist. Latenz im Sinne der vorliegenden Erfindung bedeutet, dass das Klebesystem bzw. der auf ihm basierende Klebefilm unter vordefinierten Bedingungen - wie zum Beispiel bei Raumtemperatur oder auch leicht erhöhten Temperaturen wie 35 °C oder sogar 50 °C - ohne Überschreiten der Aktivierungsenergie im Wesentlichen keine oder sogar gar keine Härtungsreaktion zeigt. In diesem Sinne ist im Rahmen dieser Schrift bei den entsprechenden Klebefilmen nach Trocknung der Klebemassenschicht(en) auch von latentreaktiven Klebebändern die Rede.

Die Reaktion folgt auf einen Aktivierungsimpuls, der unter bestimmten Aktivierungsbedingungen - insbesondere durch erhöhte Temperatur - ausgelöst werden kann. Eine charakteristische Größe zur Beschreibung der Latenz ist daher die besagte Aktivierungsenergie, und, da regelmäßig in Form von Wärme eingebracht, die entsprechende Aktivierungstemperatur. Für die erfindungsgemäß eingesetzten Härter beträgt die Aktivierungstemperatur insbesondere mindestens 60 °C, bevorzugt mindestens 75 °C, sehr bevorzugt mindestens 90 °C. Vorteilhaft liegt die Aktivierungstemperatur höchstens bei 150 °C, bevorzugt bei höchstens 120 °C.

Die Angaben zur Aktivierungsenergie beziehen sich dabei auf die Bestimmung mittels DSC-Messung, siehe Abschnitt "Referenzmethoden", Ref. 2.

Die Aktivierung erfolgt dabei in der Art, dass der Härter aus seiner modifizierten Form in eine reaktive Form überführt wird, insbesondere in seine Grundform (unmodifizierte Form). Diese reaktive Form ist in der Lage, mit den Epoxid-Gruppen eine Reaktion einzugehen und so die Härtung der Klebemasse zu bewirken.

In einer sehr bevorzugten Vorgehensweise werden die Polyamin-Addukte mikroverkapselt eingesetzt, insbesondere in Form partikulärer Mikrokapseln. Vorteilhaft besitzen mindestens 90 Gew.-% der partikulären Mikrokapseln eine mittels Laserdiffraktometrie ermittelte Partikelgröße im Bereich von 0,1 bis 10 µm, weiter vorteilhaft liegt auch die mittlere Partikelgröße der Mikrokapseln (Bestimmung mittels Lichtdiffraktometrie) in diesem Bereich (0,1 bis 10 µm).

Mikroverkapselung ist eine Technik, mit der feste, flüssige oder gasförmige Stoffe in kleinen Portionen mit einer Hülle (Kapselschale) umgeben und so beispielsweise hinsichtlich eine bestimmten aktiven Eigenschaft passiviert werden. Bei der vorliegenden Mikroverkapselung wird der Härter mit einem Hüllmaterial umhüllt. Es entsteht eine im Wesentlichen kugelförmige Kapsel. Als Hülle werden im Rahmen der vorliegenden Schrift alle Umhüllungen verstanden, die die Passivierung des Kernmaterials in hinreichender Weise bewirken. Es kann sich, muss sich aber nicht zwingend um eine geschlossene Hülle (Kapselschale) handeln; auch wenn eine solche geschlossene Form eine bevorzugte Ausführung darstellt. Erfindungsgemäß einsetzbar sind auch solche modifizierten Systeme, die mehr oder weniger durchbrochene Umhüllungen, netzartige Strukturen oder auch nur einzelne, an der Peripherie des Kerns jeweils lokal angeordnete Mengen des Hüllenmaterials aufweisen; die entsprechenden Modifikationen sind dann als Kapselhülle im Sinne der vorliegenden Erfindung aufzufassen. Auch derartige Verkapselungen können nämlich bereits geeignet sein, eine hinreichende Schutzwirkung des Härter(-kern-)materials, die erst bei thermischer Aktivierung des fertig ausgeformten und applizierten Klebebandes aufgehoben werden soll, zu bewirken.

Der Hüllbruch - die Aktivierung, siehe oben - erzeugt in der Regel eine vollständige Freisetzung des Kernmaterials - des Härters - in kurzer Zeit ("Burst"), das dann für die Härtungsreaktion zur Verfügung steht. Durch Wahl des Hüllmaterials ist es aber auch möglich, langsame bis extrem langsame Freisetzung zu erzeugen. Hierdurch kann die Kinetik der Härtungsreaktion gezielt beeinflusst werden.

Grundsätzlich unterliegt das Hüllenmaterial der Mikrokapseln keinen besonderen Beschränkungen.

Es sollte aber sehr bevorzugt in Hinblick auf die spätere thermische Aktivierung der Härter einerseits unter Aktivierung, insbesondere unter Wärmeeinwirkung über die Aktivierungstemperatur hinaus, entfernbar, aufschmelzbar oder dergleichen sein und andererseits unter Nicht-Aktivierungs-Bedingungen eine gute Stabilisierungswirkung aufweisen, zum Beispiel um eine gute Lagerstabilität der erfindungsgemäßen latentreaktiven Klebebänder zu gewährleisten. Bei Verwendung polymere Hüllmaterialien kann der Hüllbruch insbesondere durch Schmelzen der Hülle erfolgen. Der Schmelzpunkt sehr geeigneter Kapselmaterialien liegt beispielweise im Bereich von 60 bis 180 °C.

Vorteilhafte Materialien hierfür sind Polymerverbindungen, beispielweise Polyurethanverbindungen, Polyharnstoffverbindungen, Polyurethan-Polyharnstoff-Copolymerverbindungen, Polyvinylverbindungen, Melaminverbindungen, Epoxyharze und/oder Phenolharze, insbesondere jeweils solche mit den Schmelzpunkten in dem vorstehend genannten Bereich.

Im Sinne der vorliegenden Erfindung vorteilhafte Aktivierungstemperaturen, also solche Temperaturen, bei denen die Aminaddukt-Verbindungen freigesetzt werden und/oder in Lösung gehen, liegen bei mindestens 60 °C, bevorzugt bei mindestens 75 °C, weiter bevorzugt bei mindestens 90 °C. In diesem Temperaturbereich aktivierbare latentreaktive Klebebänder- und somit die Aktivierung der Härtungsreaktion - sind beispielweise für Verklebungen vorteilhaft, bei denen thermisch empfindliche Substrate beim Verkleben nicht thermisch geschädigt werden sollen. Die Härtungsdauer wird in der Regel zwischen wenigen Sekunden bis hin zu etlichen Minuten gewählt, je nach Temperatur bei der Härtung und Reaktivität der eingesetzten Härter. Vorteilhaft kann das latentreaktive Klebeband bei der Härtung zudem unter Druck gesetzt werden.

Bei thermisch beständigeren Substraten können die Verklebungen auch mittels höherer Temperaturen bewirkt werden, zum Beispiel bei mindestens 120 °C, mindestens 150 °C, mindestens 180 °C, mindestens 200 °C oder noch höher. Für bestimmte Anforderungen sind derart hohe Temperaturen sogar bevorzugt. Die Härtungsdauer kann dabei bei beispielweise 10 s, beispielweise 30 s, beispielweise 60 s, beispielweise 120 s, beispielweise 240 s, beispielweise 5 min oder beispielweise 10 min liegen, auch wenn deutlich höhere Härtungszeiten (wie beispielweise 15 min oder beispielweise 30 min oder mehr) nicht ausgeschlossen sind.

Als Härter wird zumindest eine Sorte einer modifizierten Verbindung des Polyamin-Addukt-Typs eingesetzt, wie in Anspruch 1 offenbart, siehe auch oben. Erfindungsgemäß bilden modifizierte Polyamin-Addukte mindestens einen Teil der verwendeten Härter, bevorzugt sind die eingesetzten Härter ausschließlich Polyamin-Addukte.

Als Polyamine-Addukte werden zum Teil, insbesondere ausschließlich ein oder mehrere Polyamin-Epoxy-Addukt(e) und/oder ein oder mehrere Polyamin-Isocyanat-Addukt(e) gewählt. Zu den Polyamin-Isocyanat-Addukten werden im Sinne der vorliegenden Erfindung auch Polyamin-Harnstoff-Addukte gezählt.

Bevorzugt werden als Härter zumindest zum Teil modifizierte Polyamin-Epoxy-Addukte eingesetzt, also die Reaktionsprodukte von Aminverbindungen mit Epoxidverbindungen. Durch die Modifizierung wird - wie eingangs erwähnt - die Passivierung des Härters im Latenzzustand gewährleistet.

Als besonders hervorragend haben sich etwa Polyamin-Epoxy-Addukte mit linearaliphatischen Polyaminen und Polyamin-Epoxy-Addukte mit cycloaliphatischen Polyaminen herausgestellt, wobei die Wahl des Härters hervorragend zur Optimierung der Klebemassen auf spezielle Eigenschaftsprofile genutzt werden kann. Siehe hierzu auch die Ausführungen zu den experimentellen Ergebnissen.

Als linear-aliphatisches Polyamin-Epoxy-Addukt hat sich beispielsweise das Reaktionsprodukt aus Bisphenol-A und N-(2-amino-ethyl)-1,2-ethandiamin herausgestellt, das in seiner Darreichungsform teilweise in Gegenwart von Epichlorhydrin vorliegt. Dieses Reaktionsprodukt kann als einzige Härterkomponente eingesetzt werden, aber auch in Kombination mit weiteren - insbesondere ebenfalls erfindungsgemäßen - Härtern.

In einer bevorzugten Ausführung der Erfindung wird als Polyamin-Epoxy-Addukt zumindest teilweise das Reaktionsprodukt aus Bisphenol-A-Diglycidylether und (2-Aminoethyl)cyclohexanamin eingesetzt. In besonders bevorzugter Ausführung der Erfindung wird Reaktionsprodukt aus Bisphenol-A-Diglycidylether und (2-Aminoethyl)cyclohexanamin (in modifizierter Form) als einzige Härterkomponente eingesetzt. Das zugrundeliegende (2-Aminoethyl)cyclohexylamin kann dabei grundsätzlich 4-(2-Aminoethyl)cyclohexylamin und/oder 3-(2-Aminoethyl)cyclohexylamin und/oder 2-(2-Aminoethyl)cyclohexylamin sein. Unter dem Reaktionsprodukt aus Bisphenol-A-Diglycidylether und (2-Aminoethyl)cyclohexanamin werden insbesondere Verbindungen verstanden, die unter die folgende Strukturformel gelesen werden können: 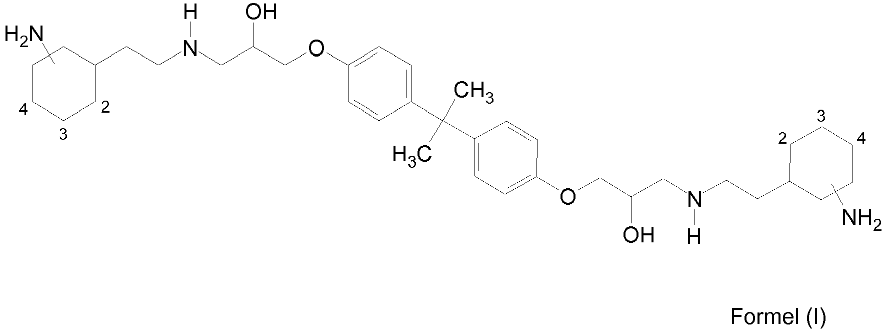 wobei die Aminogruppen an den endständigen Sechsringen jeweils in 2, 3 oder in 4-Position (vergleiche die Strukturformel) stehen können.

Das Reaktionsprodukt aus Bisphenol-A-Diglycidylether und (2-Aminoethyl)cyclohexanamin kann dabei beispielsweise in Reinform der jeweiligen symmetrischen Verbindungen vorliegen, also
- beispielsweise in Reinform der Verbindung (Formel la) 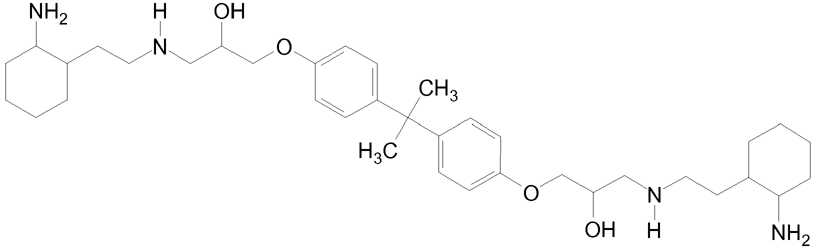
- oder beispielweise in Reinform der Verbindung (Formel Ib) 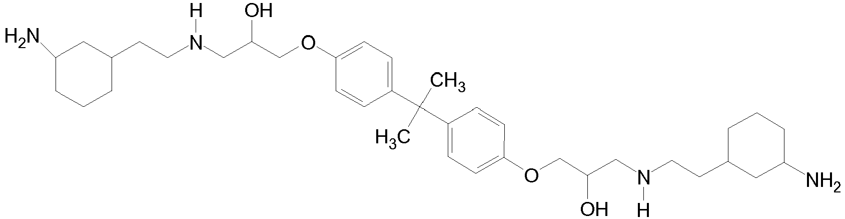
- oder beispielsweise in Reinform der Verbindung (Formel Ic) 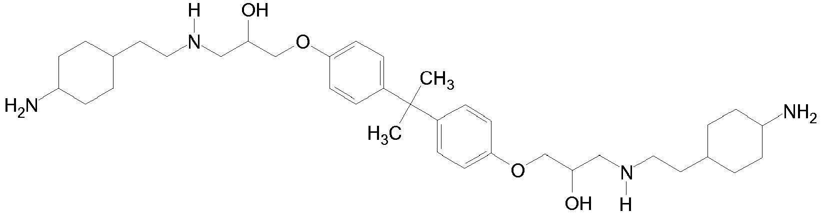
- oder beispielsweise als Isomerengemisch aus zwei oder drei der vorgenannten Verbindungen [Formel (Ia) und Formel (Ib); oder Formel (la) und Formel (Ic); oder Formel (Ib) und Formel (Ic); oder Formel (la) und Formel (Ib) und Formel (Ic)]
- oder beispielweise als Isomerengemisch aus solchen Verbindungen, an denen sich die Aminogruppen der beiden endständigen Sechsringe an unterschiedlichen Positionen befinden (asymmetrische Verbindungen),
- oder beispielsweise als Isomerengemisch aus symmetrischen und asymmetrischen Verbindungen entsprechend der vorstehenden Strukturformel.

In einer sehr bevorzugten Vorgehensweise wird das Polyamin-Epoxy-Addukt beziehungsweise werden die Polyamin-Epoxy-Addukte - wird insbesondere das Reaktionsprodukt aus Bisphenol-A-Diglycidylether und (2-Aminoethyl)cyclohexanamin - mikroverkapselt eingesetzt, insbesondere in Form partikulärer Mikrokapseln, besonders bevorzugt in den oben für erfindungsgemäß eingesetzte Mikrokapseln angegebenen Partikelgrößen.

Bevorzugte Schmelzpunkte für die Hülle der mikroverkapselten Polyamin-Epoxy-Addukte liegen in den oben genannten Bereichen für Aktivierungstemperaturen, und hier insbesondere im Bereich von 60 bis 95 °C, mehr bevorzugt im Bereich von 75 bis 85 °C.

Bevorzugte Partikelgrößen der Mikrokapseln liegen - wie eingangs erwähnt - im Bereich von 0,1 bis 10 µm, bevorzugt im Bereich von 1 bis 7 µm (Bezug: Messung mittels Laserdiffraktometrie).

Bevorzugt sind die Mikrokapseln jeweils aus
o einem Kern enthaltend das Reaktionsprodukt aus Bisphenol-A-diglycidylether und (2-Aminoethyl)cyclohexanamin, bevorzugt bestehend aus diesem Reaktionsprodukt, und
o einer Hülle aus einem Material mit einem Schmelzpunkt von mindestens 60 °C, bevorzugt im Bereich von 65 bis 95 °C, mehr bevorzugt im Bereich von 75 bis 85 °C gebildet.

Für das Hüllenmaterial wird dabei auf das oben hierzu näher Ausgeführte Bezug genommen.

Als Beispiele der Härter diesen Typs sind Reaktionsprodukte von Aminverbindungen mit Epoxidverbindungen (Amin-Epoxy-Addukt), Reaktionsprodukte von Aminverbindungen und Isocyantverbindungen oder Harnstoffverbindungen (Härter vom Harnstoffaddukttyp) und modifizierte Produkte, die durch Behandlung der Oberfläche dieser Härter mit Isocyantverbindungen oder Säureverbindungen (Fettsäuren) erhalten werden. Verwiesen sei in diesem Zusammenhang auch auf die Schriften DE 695 13 309 T2 und WO 2009/060576 A sowie die dort genannten Härter.

Als kommerziell erhältliche Beispiele von Härtern vom Amin-Epoxy-Addukte seien AJICURE PN-23, PN23J, PN-H; Adeka Hardener EH4346S, 4357S, 4356S; Ancamine 2014AS, 2014FG genannt.

Als Beispiele von Härtern vom Harnstoffaddukttyp seien Fujicure FXR-1000, FXR-1030 erwähnt.

Als Beispiele von Härtern mit spezieller Modifikation seien Adeka EH4339S, 4370S, 4380S, 5011; Ancamine 2337 genannt. Siehe hierzu auch die in der US 8,124,232 B genannten Härter.

Die vorliegende Erfindung ist jedoch nicht auf diese beschränkt.

### Weitere optionale Bestandteile

Den erfindungsgemäßen Klebemassen können optional weitere Bestandteile zugefügt werden, die die Eigenschaften des Klebesystems wunschgemäß einstellen, wie beispielsweise Füllstoffe, Farbstoffe, Haftvermittler, Entschäumer, Verdicker, Klebharze, von Epoxiden unterschiedliche Reaktivharze und/oder weitere Additive. Auf einzelne besonders bevorzugte Zusatzstoffe wird weiter unten näher eingegangen. Optionale Bestandteile werden insbesondere bereits der erfindungsgemäßen Dispersion zugesetzt, aus der die Klebmasse - insbesondere in Form eines Klebefilms - erhalten werden. Die optionalen Bestandteile können in der Dispersion selbst in Form diskreter disperser Phasen vorliegen (zum Beispiel partikulär, als Tropfen oder dergleichen), und/oder sie können mit einer oder mehreren der Basiskomponenten, insbesondere den Matrixpolymeren und/oder den Epoxiden, mischbar sein und mit diesen gemeinsame disperse Phasen ausbilden.

Sofern im Folgenden davon die Rede ist, dass die optionalen Bestandteile den Klebmassen beigemischt sind, bezieht sich dies dementsprechend auf die Zubereitung der erfindungsgemäßen Dispersion, aus denen die erfindungsgemäßen Klebmassen erhältlich sind.

Optionale Bestandteile können der Klebmasse grundsätzlich in beliebigen, den jeweiligen Anforderungen und Wünschen angepassten Mengen in die Klebmasse beigemischt werden (und hierzu zunächst in die Dispersion eingebracht werden). Wie im Folgenden näher ausgeführt, sind bestimmte Mengen für bestimmte optionale Bestandteile jedoch vorteilhaft. Angaben zu den bevorzugten Mengen optionaler Bestandteile erfolgen nachfolgend in Gewichtsteilen pro 100 Gewichtsteile Basiszusammensetzung (ohne Dispersionsmittel, siehe oben).

Optionale Bestandteile können vorteilhaft in technisch üblichen Mengen, beispielsweise bis zu etwa 100 Gew.-Teilen auf 100 Gew.-Teile Basiszusammensetzung zugegeben sein.

Beispielhaft genannt werden in diesem Zusammenhang Klebharze (insbesondere bis zu 100 Gew.-Teile, bevorzugt bis zu 35 Gew.-Teile) und weitere Zuschlagsstoffe oder Additive (typischerweise bis zu 10 Gew.-Teile), jeweils bezogen auf 100 Gewichtsteile der Basiszusammensetzung.

### Klebharze

So kann es insbesondere wünschenswert sein, den Klebmassen Klebharze beizumischen. Als Klebharze werden insbesondere oligomere bis relativ kurzkettige polymere Stoffe oder Stoffgemische eingesetzt, die meist amorphe Beschaffenheit haben und üblicherweise einen Erweichungsbereich aufweisen. Die Molmasse (Zahlenmittel M_{N}, siehe Ref. 4) von Harzen liegt in der Regel nicht über 10 000 g/mol. Klebharze - auch klebrigmachende Harze genannt - sind insbesondere solche Substanzen, die - insbesondere im Warmen - mit den Matrixpolymeren - oder zumindest einem Teil der Matrixpolymere - verträglich sind, und die die thermomechanischen Eigenschaften der Polymere beziehungsweise Polymermischungen, in denen sie enthalten sind, positiv beeinflussen; insbesondere in Hinsicht auf deren Benetzungsfähigkeit von Oberflächen und deren Fluidität. In der Regel führt die Beimischung von Klebharzen zu einer Erhöhung der Glasübergangtemperatur der Polymermischungen und zu einer Absenkung deren Moduls. Klebharze können somit beispielsweise zur Erhöhung der Klebrigkeit, Benetzungseigenschaften, Adhäsionseigenschaften und/oder Viskosität insbesondere der vom Dispersionsmittel befreiten Klebemasse dienen.

Klebharze im Sinne der vorliegenden Schrift sind insbesondere solche polymeren (einschließlich oligomerer) Stoffe und Stoffmischungen, die Erweichungstemperaturen (ASTM E28-14) von größer 25 °C, insbesondere von größer 80 °C aufweisen, insbesondere (in einer engeren Definition) zudem eine zahlenmittlere Molmasse von nicht mehr als 10 000 g/mol besitzen.

Die erfindungsgemäße Klebemasse enthält optional eine oder mehrere Sorten eines Klebharzes, vorteilhaft solche, die mit dem Epoxidharz und/oder dem Matrixpolymer und/oder dem Härtersystem verträglich sind.

Als Klebharze können in der Klebemasse zum Beispiel partiell oder vollständig hydrierte oder disproportionierte Harze auf Basis von Kolophonium und Kolophoniumderivaten, Inden-Coumaron-Harze, Terpen-Phenolharze, Phenolharze, hydrierte Polymerisate des Dicyclopentadiens, partiell, selektiv oder vollständig hydrierte Kohlenwasserstoffharze auf Basis von C5-, C5/C9- oder C9-Monomerströmen, Polyterpenharze auf Basis von α-Pinen und/oder β-Pinen und/oder δ-Limonen, hydrierte Polymerisate von bevorzugt reinen C8- und C9-Aromaten eingesetzt werden. Vorgenannte Klebharze können sowohl allein als auch im Gemisch eingesetzt werden.

Um eine hohe Alterungs- und UV-Stabilität zu gewährleisten, sind hydrierte Harze mit einem Hydrierungsgrad von mindestens 90 %, vorzugsweise von mindestens 95 % bevorzugt.

Des Weiteren sind insbesondere in Kombination mit unpolaren Filmbildnern unpolare Harze mit einem DACP-Wert (diacetone alcohol cloud point) oberhalb von 30 °C und einem MMAP-Wert (mixed methylcylohexane aniline point) von größer 50 °C, insbesondere mit einem DACP-Wert oberhalb von 37 °C und einem MMAP-Wert größer 60 °C bevorzugt. Der DACP-Wert und der MMAP-Wert geben jeweils die Löslichkeit in einem bestimmten Lösemittelgemisch an. Zur Definition und Bestimmung des DACP- und MMAP-Werts sei auf C. Donker, PSTC Annual Technical Proceedings, S. 149-164, Mai 2001 verwiesen. Bzgl. MMAP kann auch ASTM C611 konsultiert werden.

Als weitere optionale Bestandteile können als Additive der Klebemasse übliche Zuschlagstoffe wie Alterungsschutzmittel (Antiozonantien, Antioxidantien, Lichtschutzmittel usw.) zugesetzt sein.

Als mögliche Additive des Klebesystems seien folgende genannt:
- primäre Antioxidantien wie zum Beispiel sterisch gehinderte Phenole
- sekundäre Antioxidantien wie zum Beispiel Phosphite oder Thioether
- Prozessstabilisatoren wie zum Beispiel C-Radikalfänger
- Lichtschutzmittel wie zum Beispiel UV-Absorber oder sterisch gehinderte Amine
- Verarbeitungshilfsmittel wie rheologisch wirksame Additive (z. B. Verdicker)
- Netzadditive
- Blähmittel wie chemische Schäumungsmittel und/oder expandierte oder expandierbare Mikroballons und/oder Hohlkugeln wie Glashohlkugeln.
- Haftvermittler
- Verträglichkeitsvermittler / Kompatibilisatoren
- Farbmittel / Pigmente

Die Zuschlagstoffe oder Additive sind nicht zwingend, ein Vorteil der erfindungsgemäßen Klebemasse ist, dass diese ihre vorteilhaften Eigenschaften aufweist, auch ohne dass zusätzliche Additive einzeln oder in beliebiger Kombination zugesetzt sind. Dennoch kann es im Einzelnen vorteilhaft und wünschenswert sein, bestimmte weitere Eigenschaften der Klebemasse durch Additivzugabe zu justieren.

So lassen sich beispielsweise die Transparenz der Masse und deren Farbe beeinflussen. Manche Formulierungen sind optisch klar, andere opak, wieder andere farbig, schwarz, weiß oder grau eingestellt.

Auch unter den optionalen Zuschlagsstoffen beziehungsweise Additiven werden solche ausgewählt, die vor der Initiierung der Härtungsreaktion im Wesentlichen keine oder insbesondere gar keine Reaktion mit Epoxid-Funktionalitäten eingehen oder die Reaktionen der Epoxid-Funktionalitäten weder initiieren noch katalysieren, oder solche, bei denen die Reaktion mit Epoxid-Funktionalitäten anderweitig unterbunden ist.

### Haftvermittler

In bevorzugter Vorgehensweise sind den Klebmassen Haftvermittler beigemischt. Für die den Klebemassen zugrundeliegende erfindungsgemäße Dispersion ist es günstig, wenn die Haftvermittler als diskrete disperse Phase vorliegt, aber auch hier können die Haftvermittler alternativ als gemeinsame disperse Phase mit den Matrixpolymeren und/oder den Epoxiden vorliegen.

In bevorzugter erfindungsgemäßer Ausführung können Haftvermittler beispielweise bis zu 5 Gew.-Teile auf 100 Gew.-Teile der Basiszusammensetzung eingesetzt werden.

Als Haftvermittler können besonders gut Silane eingesetzt werden. Im Sinne dieser Erfindung einsetzbare Beispiele für Silane sind, ohne sich einschränken zu wollen, Methyltrimethoxysilan, Methyltriethoxysilan, Dimethyldimethoxysilan, Dimethyldiethoxysilan, Trimethylethoxysilan, Ethyltrimethoxysilan, Propyltrimethoxysilan, Propyltriethoxysilan, iso-Butyltrimethoxysilan, iso-Butyltriethoxysilan, Octyltrimethoxysilan, Octyltriethoxysilan, iso-Octyltrimethoxysilan, iso-Octyltriethoxysilan, Hexadecyltrimethoxysilan, Hexadecyltriethoxysilan, Octadecylmethyldimethoxysilan, Phenyltrimethoxysilan, Phenyltriethoxysilan, Cyclohexylmethyldimethoxysilan, Dicyclopentyldimethoxysilan.

Ein Beispiel für silylfunktionalisierte Oligomere oder Polymere, die erfindungsgemäß zum Einsatz kommen können, ist Polyethylenglykol, das mit einer Trimethoxysilan-Gruppe verknüpft ist.

Weitere Beispiele für einsetzbare Silane, die zumindest eine Funktionalisierung tragen, sind, Vinyltrimethoxysilan, Vinyltriethoxysilan, Vinyl-tri(2-methoxyethoxy)-silan, Vinyltriisopropoxysilan, Vinyldimethoxymethylsilan, Vinyltriacetoxysilan, , 3-Glycidyloxypropyltrimethoxysilan, 3-Glycidyloxypropyltriethoxysilan, 2-(3,4-Epoxycyclohexyl)-ethyltriethoxysilan, 3-Glycidyloxypropyldiethoxymethylsilan, 3-Methacryloyloxypropyltrimethoxysilan, 3-Methacryloyloxypropyltriethoxysilan, 3-Methacryloyloxypropyltriisopropoxysilan, 3-Methacryloyloxypropyldimethoxymethylsilan, 3-Methacryloyloxypropyldiethoxymethylsilan, 3-Chloropropyltrimethoxysilan, 3-Chloropropyltriethoxysilan, 3-Ureidopropyltrimethoxysilan, 3-Ureidopropyltriethoxysilan, 2-Hydroxy-4-(3-triethoxysilylpropoxy)-benzophenon, 4-(3'-Chlorodimethylsilylpropoxy)-benzophenon.

Als besonders bevorzugter Haftvermittler hat sich davon 3-Glycidyloxypropyltriethoxysilan herausgestellt, das als alleiniger Haftvermittler oder auch in Kombination mit anderen Haftvermittlern eingesetzt werden kann. Diese Verbindung hat zudem den Vorteil, dass die im Dispersionsprozess als Entschäumungsmittel fungiert.

### Füllstoffe

Kommen Füllstoffpartikel zur Anwendung so können sie in ihrer Struktur bevorzugt kugelförmig, stäbchenförmig oder plättchenförmig vorliegen. Separierte Partikel, oftmals auch Primärpartikel genannt, sind dabei ebenso erfindungsgemäß wie aus mehreren Primärpartikeln gebildete Aggregate. Solche Systeme zeigen oft eine fraktale Überstruktur. Werden die Partikel aus Kristalliten gebildet, dann hängt die Primärpartikelform von der Art des Kristallgitters ab. Plättchenförmige Systeme können auch in Form von Schichtstapeln vorliegen. Kommen Füllstoffe zur Anwendung, dann typischerweise zu bis zu 15 Gew.-%.

In einer vorteilhaften Ausführungsform dieser Erfindung liegt eine Füllstoffsorte in der Klebeformulierung im Wesentlichen in Form von singulären kugelförmigen Partikeln vor. Die Partikeldurchmesser weisen dann Werte von kleiner als 500 nm, bevorzugt von kleiner als 100 nm, sehr bevorzugt von kleiner 25 nm auf. In einer weiteren vorteilhaften Auslegung dieser Erfindung liegt die zumindest eine funktionalisierte Füllstoffsorte in der Klebemasse im Wesentlichen in Form von singulären plättchenförmigen Partikeln vor. Die Schichtdicke solcher Plättchen weist dann Werte von bevorzugt kleiner als 10 nm und einen größten Durchmesser von bevorzugt kleiner als 1000 nm auf. In einer weiteren vorteilhaften Auslegung dieser Erfindung liegt die zumindest eine Füllstoffsorte in der Klebemasse im Wesentlichen in Form von singulären stäbchenförmigen Partikeln vor. In diesem Fall weisen diese Stäbchen einen Durchmesser von kleiner als 100 nm und eine Länge von kleiner als 15 µm auf. Die Stäbchen können auch gekrümmt vorliegen und/oder flexibel sein. Weiterhin ist es im Sinne dieser Erfindung vorteilhaft möglich, dass die zumindest eine Füllstoffsorte in der Klebemasse in Form von Primärpartikelaggregaten vorliegt. Diese Aggregate weisen einen Gyrationsradius (zu verstehen analog dem von Polymeren bekannten Terminus "Gyrationsradius") von kleiner als 1000 nm, bevorzugt von kleiner als 250 nm auf. Besonders bevorzugt werden solche Füllstoffpartikel im Sinne dieser Erfindung eingesetzt, deren räumliche Ausdehnung in zumindest einer Richtung kleiner als 250 nm ist, bevorzugt kleiner als 100 nm, sehr bevorzugt kleiner als 50 nm. Es ist außerdem im Sinne dieser Erfindung möglich, Kombinationen aus den zuvor genannten Füllstoffarten einzusetzen.

Typische und weitere erfindungsgemäß vorteilhafte Verbindungsklassen für Füllstoffe sind Oxide anorganischer Natur - insbesondere Metalloxide und/oder Halbmetalloxide -, Salze der Erdalkalimetalle sowie Minerale auf Silikatbasis, insbesondere Tonminerale und Tone. Zu den erfindungsgemäß einsetzbaren amorphen oder kristallinen Metalloxiden zählen zum Beispiel Siliziumdioxid, Aluminiumoxid, Titandioxid, Zirkoniumdioxid und Zinkoxid. Dem Fachmann sind weitere Systeme geläufig, die ebenso erfindungsgemäß eingesetzt werden können. Erdalkalimetallsalze umfassen beispielsweise Carbonate, Sulfate, Hydroxide, Phosphate und Hydrogenphosphate des Magnesiums, des Calciums, des Strontiums und des Bariums. Zu den erfindungsgemäß einsetzbaren Tonmineralen und Tonen zählen insbesondere silikatische Systeme wie Serpentine, Kaoline, Talkum, Pyrophyllit, Smectite wie insbesondere Montmorillonit, Vermiculite, Illite, Glimmer, Sprödglimmer, Chlorite, Sepiolith und Palygorskit. Weiterhin können synthetische Tonminerale wie Hectorite sowie deren verwandte Systeme wie z. B. Laponite ^{®} der Fa. Laporte und Fluorhectorite sowie deren verwandte Systeme wie z. B. Somasif ^{®} der Fa. Co-Op erfindungsgemäß eingesetzt werden.

Füllstoffpartikel können an ihrer Oberfläche funktionalisiert sein, hydrophob oder hydrophil eingestellt sein. Besonders vorteilhaft ist eine Funktionalisierung mittels Epoxid-haltigen Verbindungen, die an der Härtungsreaktion teilnehmen können.

Die Füllstoffe sind nicht zwingend, die Klebemasse funktioniert auch, ohne dass diese einzeln oder in beliebiger Kombination zugesetzt sind. Auch unter den optionalen Füllstoffen werden solche ausgewählt, die vor der Initiierung des Härtungsprozesses im Wesentlichen keine oder insbesondere gar keine Reaktion mit Epoxid-Funktionalitäten eingehen oder Reaktionen der Epoxid-Funktionalitäten initiieren oder katalysieren oder bei denen die Reaktion mit Epoxid-Funktionalitäten anderweitig unterbunden ist.

### Klebemassen, erhältlich aus der erfindungsgemäßen Dispersion

Durch Entfernung des Dispersionsmittels können aus den erfindungsgemäßen Dispersionen latentreaktive Klebmassen hergestellt werden, die insbesondere schichtförmig in Form von Klebebändern ausgestaltet sind. Näheres zu den Klebebändern siehe weiter unten. Dies kann beispielweise durch Trocknung auf Restdispersionsmittelgehalte von nicht mehr als 5 Gew.-% (bezogen auf die Klebemasse) geschehen. Die nachfolgenden Ausführungen beziehen sich auf die entsprechend vom Dispersionsmittel befreiten Klebemassen.

In bevorzugter Weise weist die härtbare Klebemasse im nicht gehärteten Zustand eine erste Glasübergangstemperatur auf, die unterhalb derjenigen Temperatur liegt, bei der der Klebeverbund bestehend aus Reaktivklebefilm und zu verklebenden Substraten durch Lamination erstellt wird, so dass die Formulierung unter den Laminierbedingungen unter Druck in einem definierten Zeitraum ein ausreichendes Benetzen auf dem Substrat / den Substraten erlaubt. Die für die Laminierung genutzte Temperatur wird im Sinne dieser Erfindung "Laminiertemperatur" genannt. Die Temperaturdifferenz zwischen der Laminiertemperatur und Glasübergangstemperatur liegt vorzugsweise bei mindestens 40 °C, insbesondere bei mindestens 70 °C oder sogar bei mindestens 100 °C, wobei die Laminiertemperatur oberhalb der Glasübergangstemperatur liegt. Die Laminiertemperatur liegt vorteilhaft zwischen 40 °C und 110 °C, insbesondere zwischen 50 °C und 90 °C. Sie liegt unterhalb der Aktivierungstemperatur, also derjenigen Temperatur, bei der die Härtung der härtbaren Klebemasse initiiert wird. Die Differenz zwischen Laminiertemperatur und Aktivierungstemperatur liegt vorteilhaft bei mindestens 20 °C, insbesondere bei mindestens 40 °C.

Weiter vorteilhaft weist auch bereits das Epoxidharz im nicht gehärteten Zustand eine erste Glasübergangstemperatur auf, die unterhalb derjenigen Temperatur liegt, bei der der Klebeverbund bestehend aus Klebefilm und zu verklebenden Substraten durch Lamination erstellt wird. Die Temperaturdifferenz zwischen der Laminiertemperatur und Glasübergangstemperatur des ungehärteten Epoxidharzes liegt in diesem Fall vorzugsweise bei mindestens 20 °C, insbesondere bei mindestens 40 °C, wobei die Laminiertemperatur oberhalb der Glasübergangstemperatur liegt.

Die Titulierung "gehärtetes System" oder "gehärtete Klebemasse" bedeutet im Sinne dieser Erfindung, dass die Klebemasse mit dem Epoxidharz (B) durch Einwirkung der HärterKomponente und erhöhter Temperatur als weiterem Stimulus aktiviert wurde und eine Reaktion unter Beteiligung der funktionellen Gruppen des Epoxidharzes (B) stattgefunden hat. Es brauchen aber nicht alle funktionellen Gruppen, die chemisch an der Härtungsreaktion teilnehmen können, reagiert zu haben. Vielmehr kann auch ein Umsatz von 50 % der funktionellen Gruppen bereits eine ausreichend hohe Glasübergangstemperatur mit sich bringen und für die Verklebungsanwendung sehr gut geeignet sein. Ein Umsatz von 50 % ist hier beispielhaft genannt. Ebenso kann die gemachte Aussage auch auf höhere Umsätze wie 60 %, 70 %, 80 %, 90 % oder 100 % oder sogar niedrigere Umsätze wie 40 % oder 30 % gelten. Angestrebt wird dabei, dass die Verklebungseigenschaften nach durchgeführter Härtung anwendungsgerecht sind. Bevorzugte Eigenschaften und in den Experimenten realisierte Werte sind hierzu in den weiter hinten aufgeführten Tabellen 2 und 3 angegeben.

Die Klebemasse kann unter Standardbedingungen (23 °C, 50 % rel. Luftfeuchtigkeit) haftklebrig sein. Sie weist dann im nicht gehärteten Zustand eine Glasübergangstemperatur von unter 0 °C, vorzugsweise von höchstens -25 °C auf. Diese Charakteristik vereinfacht Konfektionierprozesse wie die Vordimensionierung von Klebebandabschnitten für den späteren Verklebungsprozess oder auch Laminierschritte bei der Herstellung von Klebeproduktaufbauten und Bauteilverklebung. Im Laminierprozess braucht in diesem Fall nicht unbedingt mit erhöhter Temperatur gearbeitet zu werden sondern kann bei Raumtemperatur laminiert werden, da bereits über den Laminationsdruck ein ausreichender Kontakt zwischen Klebmasse und den zu verklebenden Substraten realisiert werden kann.

Unter dem Begriff "Haftklebemasse" beziehungsweise "haftklebrige Klebemasse" (PSA; englisch: "pressure sensitive adhesives") werden wie üblich solche viskoelastischen, polymeren Massen verstanden, die - gegebenenfalls durch geeignete Additivierung mit weiteren Komponenten, wie beispielsweise Klebharzen (D1) - bei der Anwendungstemperatur (sofern nicht anders definiert, bei Raumtemperatur, also 23 °C) dauerhaft klebrig und permanent klebfähig sind und an einer Vielzahl von Oberflächen bei Kontakt anhaften, insbesondere sofort anhaften (die einen sogenannten "Tack" [auch als Klebrigkeit oder Anfassklebrigkeit bezeichnet] aufweisen). Sie sind in der Lage, bereits bei der Anwendungstemperatur ohne eine Aktivierung durch Lösemittel oder durch Wärme - gegebenenfalls unter Einfluss eines mehr oder weniger hohen Druckes - ein zu verklebendes Substrat hinreichend zu benetzen, damit sich zwischen der Masse und dem Substrat für die Haftung hinreichende Wechselwirkungen ausbilden können.

Die Klebemasse kann unter Standardbedingungen (23 °C, 50 % rel. Luftfeuchtigkeit) aber auch nicht oder nur gering haftklebrig sein. Um dies einzustellen, kann sie dann im nicht gehärteten Zustand eine Glasübergangstemperatur von mindestens 0 °C, vorzugsweise von mindestens 25 °C aufweisen. Sie kann auch, insbesondere wenn semikristalline Polymere für Matrixpolymere (A) verwendet werden, deutlich niedriger liegen (z. B. -25 °C oder darunter) Diese Charakteristik erlaubt ein vorteilhaftes Platzieren der Klebeprodukte im Verklebungsprozess und kein vorzeitiges Anhaften an eine Oberfläche in falscher Position. Darüber hinaus zeigt sich diese Charakteristik vorteilhaft für latentreaktive Klebesysteme, da etwaige Reaktivität im glasigen / zähelastischen Zustand signifikant (kinetisch) herabgesetzt ist und man dadurch eine verbesserte Latenz erreicht. Für den Laminierprozess ist dann neben Druck aber auch eine erhöhte Temperatur erforderlich.

Bei Applikation, insbesondere Lamination unter Erwärmung und Verpressung, erweicht das Klebesystem, nimmt in seinem Benetzungsverhalten zu und kann dadurch zu den zu verklebenden Substraten Kontakt ausbilden.

### Reaktivklebebänder

Gegenstand der Erfindung sind weiterhin Klebebänder - nämlich latentreaktive Klebebänder - , erhältlich durch Ausbringung der erfindungsgemäßen Dispersion als Schicht und anschließende Trocknung. Gegenstand der Erfindung sind zudem Verbünde, erhältlich durch Verkleben zweier Substrate mittels der erfindungsgemäßen latent reaktiven und thermisch härtbaren Klebemassenschicht - einschließlich jede ihrer beschriebenen Ausgestaltungen - insbesondere nach einem Verfahren wie im nachstehenden näher erläutert.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, sowie auch Stanzlinge und Etiketten.

Das latentreaktive Klebeband weist somit eine Längsausdehnung (x-Richtung) und eine Breitenausdehnung (y-Richtung) auf. Der Haftklebestreifen weist auch eine senkrecht zu beiden Ausdehnungen verlaufende Dicke (z-Richtung) auf, wobei die Breitenausdehnung und Längsausdehnung um ein Vielfaches größer sind als die Dicke. Die Dicke ist über die gesamte durch Länge und Breite bestimmte Flächenausdehnung des Klebebands möglichst gleich, vorzugsweise exakt gleich.

Typische Konfektionierformen der erfindungsgemäßen Klebebänder sind Klebebandrollen sowie Klebestreifen, Klebestreifenabschnitte und Klebestreifenzuschnitte, wie sie zum Beispiel in Form von Stanzlingen erhalten werden.

Beispielsweise weisen alle Schichten im Wesentlichen die Form eines Quaders auf, weiter beispielweise nehmen die Formen des Klebebandes diejenige Form zumindest eines der zu verklebenden Substrate auf, indem sie etwa rahmenförmig, rund oder dergleichen sind. Die Form der Klebebänder beziehungsweise der Klebebandzuschnitte kann sich hiervon jedoch auch signifikant unterscheiden - indem zum Beispiel ein rechteckiges Bauteil mit einem rahmenförmigen klebebandzuschnitt nur an seinem Rand verklebt wird - wird. Die Klebebandform wird insbesondere angepasst an die Form der später gewünschten Verklebungsflächen. Der Formenvielfalt sind hier erfindungsgemäß keine Grenzen gesetzt.

Umfasst das Klebeband in seinem Aufbau mehrere Schichten, so sind diese vorzugsweise vollflächig miteinander verbunden. Diese Verbindung kann durch die Vorbehandlung einzelner oder aller Oberflächen der Schichten des Klebebandes, die jeweils miteinander in Kontakt stehen, optimiert werden.

Das erfindungsgemäße Klebeband liegt in einer vorteilhaften Darreichungsausführung in Bahnform vor. Unter einer Bahn wird ein Objekt verstanden, dessen Länge (Erstreckung in x-Richtung) um ein Vielfaches größer ist als die Breite (Erstreckung in y-Richtung) und die Breite entlang der gesamten Länge in etwa vorzugsweise genau gleich bleibend ausgebildet ist. Das Klebeband, insbesondere in Bahnform, kann in Form einer Rolle, also in Form einer archimedischen Spirale auf sich selbst aufgerollt, hergestellt werden.

Optional können eine oder beide der äußeren, frei liegenden Flächen der außenliegenden Klebemassenschichten des Klebebandes - beziehungsweise eine oder beide der außenliegenden Oberflächen des einschichtigen Klebebandes - mit reversibel - temporär - aufgebrachten Schutzmaterialien, etwa beidseitig antiadhäsiv beschichteten Materialien, ausgerüstet sein, beispielweise mit Trennpapier oder Trennfolie. Derartige Schutzschichten werden auch als Liner bezeichnet. Solche Schutzschichten sind insbesondere dann - aber nicht nur dann - von Vorteil, wenn die entsprechende Klebmassenschicht haftklebrige Eigenschaften besitzt.

Ein Liner (Trennpapier, Trennfolie) ist nicht Bestandteil eines Klebebandes, sondern nur ein Hilfsmittel zu dessen Herstellung, Lagerung und/oder für die Weiterverarbeitung durch Stanzen. Darüber hinaus ist ein Liner im Gegensatz zu einem Klebebandträger nicht fest mit einer Klebstoffschicht verbunden.

Die erfindungsgemäßen Klebesysteme basieren auf Formulierungen, die erfindungsgemäß mindestens ein Matrixpolymer als Filmbildner, mindestens ein Epoxidharz sowie mindestens einen Härter enthalten. Als latentreaktives Klebeband ist das Dispersionsmittel weitgehend oder vollständig entfernt.

Das Verhältnis von Reaktivharz(en) zu Härter(n) wird dabei insbesondere derart gewählt, dass es unter stöchiometrischer Betrachtung vorteilhaft ist. Dabei ergibt sich ein hoher Freiheitsgrad an Kombinationsmöglichkeiten, je nach gewünschten Eigenschaften des resultierenden latentreaktiven Klebesystems.

Wird jeder Epoxidgruppe eine Amingruppe zur Reaktion zur Verfügung gestellt, ist das stöchiometrische Epoxid:Amin-Verhältnis 1:1. Jedoch kann es bei der erfindungsgemäßen Klebmasse ebenso vorteilhaft sein - je nach gewünschtem Ergebnis -, das Verhältnis zu Gunsten von Epoxidgruppen oder Amingruppen zu formulieren, also eine Über.- oder Untervernetzung zu erreichen.

Zur Lösung der erfindungsgemäßen Aufgabe in einer besonders bevorzugten Weise liegt das Verhältnis Epoxidgruppen der vorliegenden Epoxide zu Amingruppen der vorliegenden Härter (stöchiometrisch) zwischen 1 zu 0,3 und 1 zu 1,5, bevorzugt zwischen 1: 0,5 und 1 zu 0,9 Anteilen. Je nach Funktionalitäten der entsprechend eingesetzten Substanzen aus diesen Klassen werden deren entsprechende Einsatzmengen gewählt.

Des Weiteren kann das Verhältnis von Matrixpolymeren (also des Filmbildners) zur Reaktivkomponente, gebildet aus den Epoxiden und den Härtern, in verschiedenster Form und für unterschiedlichste Anforderungen variiert werden. Zur Lösung der erfindungsgemäßen Aufgabe in einer besonders bevorzugten Weise liegt das Verhältnis von Matrixpolymeren zur Reaktivkomponente in Gewichtsanteilen (Matrixpolymere in Summe zu Epoxiden und Härtern in gemeinsamer Summe) zwischen 1 zu 1 und 1 zu 0,1 bevorzugt zwischen 1: 0,5 und 1 zu 0,2 Gewichtsanteilen. Diese Grenzen sind zunächst unabhängig angegeben von dem Verhältnis von Epoxiden zu Härtern innerhalb der Reaktivkomponente; ganz besonders bevorzugt liegt dabei auch das Verhältnis von Epoxidgruppen zu Härter-Aminogruppen innerhalb der Reaktivkomponente in den Relationen, wie im Absatz zuvor definiert.

Die Schichtdicke der zumindest einen Schicht einer erfindungsgemäßen härtbaren Klebemasse in den erfindungsgemäßen Reaktivklebebändern liegt typischerweise zwischen zumindest 10 µm und höchstens 500 µm, bevorzugt zwischen zumindest 20 µm und höchstens 250 µm. Nützliche Schichtdicken betragen 30 µm, 50 µm, 75 µm, 100 µm, 125 µm, 150 µm und 200 µm (jeweils im Rahmen der üblichen Fehlertoleranzen).

Bei den erfindungsgemäßen Klebebändern handelt es sich insbesondere um doppelseitig klebende Klebeprodukte, auch wenn einseitig klebende Klebeprodukte ebenfalls möglich sind. Die erfindungsgemäßen Klebebänder enthaltend zumindest eine Schicht einer erfindungsgemäßen härtbaren Klebemasse. Sie kommen im einfachsten Fall in einschichtiger Form zum Einsatz (so dass die härtbare Klebemasseschicht und das Reaktivklebeband identisch sind), aufgebracht auf ein wieder ablösbares (temporäres) Trägermaterial. Als temporäres Trägermaterial bieten sich alle Trennfolien und -papiere an, die aus dem Stand der Technik bekannt sind und ein- oder beidseitig mit einer Trennschicht ausgerüstet sind. Silikonisierte Papiere werden bevorzugt. Papiere können auch ein- oder beidseitig mit Polyethylen oder Polypropylen beschichtet sein. Es können auch zwei Lagen eines wiederablösbaren Trägermaterials zum Einsatz kommen, so dass Ober- und Unterseite des Klebefilms abgedeckt sind, auch wenn das Produkt nicht aufgewickelt vorliegt. Ein temporäres Trägermaterial ist nicht Teil des verklebten Verbunds. Es wird vor Verklebung der Substrate vom Reaktivklebeband entfernt.

Die erfindungsgemäßen Klebebänder können in einer anderen Realisierung der Erfindung zumindest eine Schicht eines Trägermaterials enthalten, das auch nach Verklebung Teil des Verbunds ist (Permanentträger). Hierzu bieten sich ebenfalls Folien und Papiere - die aber dann üblicherweise nicht antiadhäsiv sind -, aber beispielweise auch Gelege, Gewebe und Gewirke an. Die Oberflächen dieser Trägermaterialien können jeweils unabhängig voneinander chemisch (Primer, Plasma) und/oder physikalisch (Corona, Flamme, Plasma) so vorbehandelt sein, dass eine besonders gute Verankerung der härtbaren Klebefilmschicht auf dem Trägermaterial erreicht werden kann. Zum Zwecke der Verankerungsverbesserung auf Permanentträgermaterialien kann auch die Klebemasse physikalisch vorbehandelt werden (Corona, Flamme, Plasma).

Vliese als Permanentträger werden bevorzugt. Als Trägervlies werden in diesem bevorzugten Fall insbesondere Flächengebilde aus einzelnen Fasern eingesetzt. Dabei können alle nach der Norm DIN EN 29092 definierten Vliese eingesetzt werden. Das Vlies besteht aus lose zusammengelegten Fasern, welche noch nicht miteinander verbunden sind. Die Festigkeit resultiert aus der Faser-eigenen Haftung. Man differenziert dabei zum einen zwischen verfestigten und nicht-verfestigten Vliesen. Die Fasern sind statistisch verteilt. Die Vliese lassen sich auch nach den Fasermaterialien differenzieren. Als Fasermaterialien können mineralische Fasern, wie zum Beispiel Glas, Mineralwolle oder Basalt, tierische Fasern, wie zum Beispiel Seide oder Wolle, pflanzliche Fasern, wie zum Beispiel Baumwolle, Zellulose, chemische Fasern, wie zum Beispiel Polyamid, Polypropylen, Polyphenylensulfid, Polyacrylnitril, Polyimid, Polytetrafluorethylen, Aramid oder Polyester, oder Mischungen aus den vorgenannten Substanzen eingesetzt werden. Die Fasern können mechanisch durch Vernadelung oder Wasserstrahlen verfestigt werden, chemisch durch Zugabe von Bindemitteln oder thermisch durch das Erweichen in einem geeigneten Gasstrom, zwischen beheizten Walzen oder auch in einem Dampfstrom.

In einer sehr bevorzugten Auslegung der Erfindung werden Vliese auf Cellulosebasis eingesetzt. Das Flächengewicht der Vliese beträgt bevorzugt zwischen 4 und 100 g/m², besonders bevorzugt zwischen 10 und 70 g/m². Solche Vliese sind zum Beispiel kommerziell von der Firma Glatfelter erhältlich. Die Dicke dieser Vliese beträgt bevorzugt zwischen 20 und 100 µm, äußerst bevorzugt zwischen 30 und 60 µm.

Erfindungsgemäße Klebebänder mit Permanentträger können einseitig klebend ausgestaltet sein - wobei insbesondere nur eine Seite des Permanentträgers direkt oder mittels weiterer Schichten mit einer Schicht der erfindungsgemäßen Klebemasse ausgerüstet ist - oder beidseitig klebend ausgestaltet sein, wobei beide Seiten des Permanentträgers - direkt oder über weitere dazwischen liegende Schichten - jeweils mit einer erfindungsgemäßen Klebemassenschicht ausgerüstet sind. Die Klebebänder können bezüglich chemischer Zusammensetzung und Dimensionen der Schichten auf beiden Seiten des Permanentträgers symmetrisch aufgebaut sein, aber auch asymmetrisch, wobei bei letztgenannter Variante auf der Ober- und Unterseite des Klebebandes verschieden dicke latentreaktive Klebemasseschichten und/oder bevorzugt latentreaktive Klebemasseschichten unterschiedlicher Art (chemischer Zusammensetzung) vorgesehen sind. Kommen verschiedene latentreaktiv Klebemasseschichten zum Einsatz, dann erfüllen insbesondere beide die Voraussetzungen als erfindungsgemäße latentreaktive Klebemassen.

Bei mehrschichtigen Reaktivklebebändern mit oder ohne Permanentträger sind prinzipiell auch solche Ausführungen möglich, die auf der Oberseite die erfindungsgemäße latentreaktive Klebemasse aufweisen und auf der Unterseite eine Schicht eines anderen Klebers, wie beispielsweise einer Haftklebemasse oder eines Schmelzklebers.

Mehrschichtige und permanentträgerhaltige Reaktivklebebänder können beispielweise Dicken von 20 µm bis 1000 µm, bevorzugt von 30 µm bis 300 µm aufweisen.

Das Reaktivklebeband kann bahnförmig als Rollenware, als Blattware oder als Stanzling konfektioniert sein und so zum Aufbau des Verbunds genutzt werden. Die Reaktivklebebänder sind bevorzugt bei Raumtemperatur nicht haftklebrig, da das Material so sehr vorteilhaft auch ohne temporären Träger konfektioniert (z. B. gestanzt) und für den Weiterverarbeitungsprozess zur Verfügung gestellt werden kann. Eine haftklebrige Ausgestaltung ist jedoch auch denkbar und von der Erfindung umfasst.

Teil der Erfindung sind weiterhin Verbünde umfassend ein erstes Verklebungssubstrat, ein zweites Verklebungssubstrat und dazwischen angeordnet ein erfindungsgemäßes Reaktivklebeband, und zwar sowohl im noch nicht gehärteten Zustand des Klebebandes als auch in dessen gehärteten Zustand. In dem verklebten Verbund liegt das Reaktivklebeband im gehärteten Zustand vor. Exemplarisch sei eine typische Herstellmöglichkeit für solche Verbünde unter Nutzung erfindungsgemäßer Reaktivklebebänder aufgeführt.

Im einfachsten Fall wird ein Stanzling des Reaktivklebebands ohne temporären Träger manuell, zum Beispiel mit Hilfe einer Pinzette, auf dem ersten Bauteil bzw. zwischen den zusammenzufügenden Bauteilen positioniert. In einer weiteren Ausführung wird der Stanzling des Reaktivklebebands nach der Positionierung auf dem ersten Bauteil mit einer Wärmequelle behandelt, wodurch sich die Haftung des Stanzlings zum ersten Bauteil erhöht. Dies geschieht bei der Laminiertemperatur. Im einfachsten Fall kann als Wärmequelle ein IR Strahler, ein Bügeleisen oder eine Heizplatte eingesetzt werden. Für diesen Prozess ist es von Vorteil, wenn der Stanzling noch mit einem temporären Trägermaterial ausgestattet ist, um ein Anhaften des Klebefilms am Werkzeug bzw. der Wärmequelle zu verhindern.

In einer weiteren vorteilhaften Ausgestaltung wird das erste Bauteil auf den Stanzling des Reaktivklebebands platziert. Die Platzierung erfolgt auf der offenen Seite. Auf der Rückseite befindet sich noch das temporäre Trägermaterial. Anschließend wird durch eine Wärmequelle Wärme durch das erste Bauteil in das Reaktivklebeband eingebracht. Dies erfolgt bei der Laminiertemperatur. Dadurch wird der Klebefilm tackig, d.h. klebrig, und haftet stärker am ersten Bauteil als an dem temporären Träger. Es wird durch das erste Bauteil geheizt.

Für die Einbringung der Wärme wird in einer bevorzugten Auslegung eine Heizpresse eingesetzt. Der Stempel der Heizpresse ist dabei zum Beispiel aus Aluminium, Messing oder Bronze gefertigt und wird in seiner Ausformung in der Regel den Konturen des Bauteils bzw. den Dimensionen des Stanzlings angepasst. Um eine genaue Positionierung des Stanzlings auf dem ersten Bauteil zu gewährleisten, werden in der Regel Formteile eingesetzt, die den Konturen der zu verklebenden Bauteile angepasst sind, wodurch Verrutschungen verhindert werden. Durch Führungsstifte im Formteil und entsprechende Führungslöcher im temporären Trägermaterial des Reaktivklebebands kann die exakte Positionierung zwischen Stanzling und erstem Bauteil sichergestellt werden. Andere Positionierungsmöglichkeiten sind denkbar. Nach der Wärmeaktivierung wird das erste Bauteil mit dem auflaminierten Klebefilm vom Formteil entfernt. Der gesamte Prozess kann auch in einen automatischen Prozess überführt werden.

Das Verfahren zur Herstellung eines erfindungsgemäßen Verbunds betrifft daher auch den Teilprozess umfassend die folgenden Schritte:
a) Fixieren des ersten Bauteils (Substrats) auf einem Formbauteil (einer Halterung);
b) Platzieren des zu verklebenden zweiten Bauteils (Substrats) mit einem Reaktivklebeband mit mindestens einem erfindungsgemäßen Klebeband auf dem zweiten Bauteil (Substrat);
c) Applizieren von Druck und Temperatur, insbesondere mittels eines Heizpressstempels;
d) Entfernen des verklebten Verbunds aus dem Formbauteil (der Halterung),
wobei zwischen Schritt c) und Schritt d) wahlweise noch eine Rückkühlung durchgeführt werden kann. In Schritt c) werden Druck und Temperatur appliziert. Bei dieser Temperatur handelt es sich um die Aktivierungstemperatur. Dies erfolgt durch einen Heizstempel, der aus einem Material mit guter thermischer Leitfähigkeit besteht. Vorteilhafte Materialien sind zum Beispiel Kupfer, Messing, Bronze oder Aluminium. Es können aber auch andere Metalle oder Legierungen eingesetzt werden. Des Weiteren sollte der Heizpressstempel bevorzugt die Form der Oberseite des einen Bauteils einnehmen. Diese Form kann wiederum 2-dimensionaler oder 3-dimensionaler Natur sein. Der Druck wird vorteilhafter Weise über einen Pneumatikzylinder aufgebracht. Die Applizierung muss aber nicht unbedingt über Luftdruck erfolgen. Auch sind zum Beispiel hydraulische Pressvorrichtungen oder elektromechanische Stellantriebe zum Beispiel über Spindeln möglich. Des Weiteren kann es von Vorteil sein, mehrfach Druck und Temperatur einzubringen, um zum Beispiel durch Reihenschaltung oder Rotationsprinzip den Prozessdurchsatz zu erhöhen. Die Heizpressstempel müssen in diesem Fall nicht alle mit der gleichen Temperatur und/ oder gleichem Druck betrieben werden. Weiterhin können auch die Kontaktzeiten der Stempel unterschiedlich gewählt werden.

### Referenzmethoden

### Erweichungstemperaturen (Ref. 1)

Erweichungstemperaturen und -bereiche von polymeren Verbindungen, wie auch Harzen, sind auf die Bestimmung gemäß ASTM E28-14 bezogen.

### Aktivierungstemperaturen (Ref. 2)

Die für die thermische Härtung der kationisch härtbaren Reaktivharze relevanten Aktivierungstemperaturen sind in Bezug auf die Bestimmung mittels Differential Scanning Calorimetry (DSC) angegeben, die wie folgt durchgeführt wird: Die Muster werden in Al-Tiegeln mit gelochtem Deckel und Stickstoffatmosphäre vermessen. Um ein gutes Bedecken des Tiegelbodens mit der Probe zu erreichen, wird das Muster im Gerät zunächst auf 40 °C aufgeheizt und wieder auf 25 °C abgekühlt. Die eigentliche Messung wird bei 25 °C gestartet, die Aufheizkurve läuft mit einer Heizrate von 10 K/min. Die erste Aufheizkurve wird ausgewertet. Das Anspringen der thermisch initiierten Härtungsreaktion wird von der Messapparatur durch die damit verbundene frei werdende Reaktionsenthalpie registriert und als exothermes Signal (Peak) im Thermogramm angezeigt. Als Aktivierungstemperatur wird diejenige Temperatur dieses Signals verwendet, bei der die Messkurve von der Basislinie abzuweichen beginnt. Zur Ermittlung dieses Punktes dient die erste Ableitung des Thermogramms; der Beginn der Reaktion kann mit dem Punkt im Thermogramm in Verbindung gebracht werden, bei dem die Differenz der ersten Ableitung des Peaks im Onsetbereich und der ersten Ableitung der Basislinie des Thermogramms einen Betrag von 0,01 mW/(K min) annimmt. Sind exotherme Signale im Diagramm nach oben dargestellt, dann ist das Vorzeichen positiv, sind sie nach unten dargestellt, dann ist das Vorzeichen negativ.

### Partikelgröße (Ref. 3)

Die Partikelgröße pulverförmiger Substanzen - wie insbesondere der Härter - wurde mittels Laserdiffraktometrie an der trockenen Probe im Medium Luft gemessen. Die Werte werden wie ermittelt angegeben, also als ob ideal kugelförmige Partikeln vorliegen würden.

### Molmassen (Ref. 4)

Die Angaben des Molmasse (Zahlenmittel M_{N} wie auch Gewichtsmittel M_{W}) und - sofern relevant - der Polydispersität PD beziehen sich auf die Bestimmung per Gelpermeationschromatographie. Die Bestimmung erfolgt an 100 µL klarfiltrierter Probe (Probenkonzentration 1 g/L). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 µ, 10³ Å, ID 8,0 mm x 50 mm verwendet. Zur Auftrennung werden die Säulen des Typs PSS-SDV, 5µ, 10³ Å sowie 10⁵ Å und 10⁶ Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 mL pro Minute.

Die Kalibrierung erfolgt gegen PMMA-Standards (Polymethylmethacrylat-Kalibrierung) beziehungsweise bei (Synthese-)Kautschuken gegen Polystyrol.

### Glasübergangstemperatur (Ref. 5)

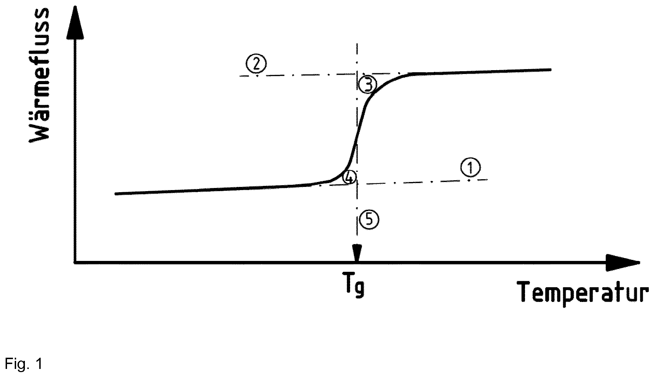

Die Bestimmung von Glasübergangstemperaturen (T_{G}) erfolgt mittels dynamischer Differenzkalorimetrie (DSC; englisch Differential Scanning Calorimetry) an einem DSC 204 F1 der Firma Netzsch. Die Probe wird in verstärkte Aluminium-Tiegel (Deckel manuell gelocht) eingewogen. Das Temperaturprogramm fährt zwei Aufheizrampen, zuerst wird von 25 °C auf - 100 °C mit flüssigem Stickstoff heruntergekühlt und mit 10 K/min auf 180 °C aufgeheizt. Glasübergänge werden als Stufen im Thermogramm erkannt. Die Glasübergangstemperatur wird folgendermaßen ausgewertet (siehe dazu Figur 1). An die Basislinie des Thermogramms vor 1 und nach 2 der Stufe wird jeweils eine Tangente angelegt. Im Bereich der Stufe wird eine Ausgleichsgerade 3 parallel zur Ordinate so gelegt, dass sie die beiden Tangenten schneidet und zwar so, dass zwei Flächen 4 und 5 (zwischen der jeweils einen Tangente, der Ausgleichsgeraden und der Messkurve) gleichen Inhalts entstehen. Der Schnittpunkt der so positionierten Ausgleichsgeraden mit der Messkurve gibt die Glasübergangstemperatur. Anschließend wird wieder auf -100 °C heruntergekühlt und mit 10 K/min auf 250 °C aufgeheizt. Es werden die erste und die zweite Aufheizrampe ausgewertet. Die so ermittelte Glasübergangstemperatur der ersten Aufheizkurve entspricht der Glasübergangstemperatur des unvernetzten Polymers. Die ermittelte Glasübergangstemperatur resultierend aus der zweiten Aufheizkurve entspricht einer, durch die thermische Beanspruchung der Messung vernetzten Glasübergangstemperatur des Polymers bzw. einer durch die Aktivierung eines thermischen Vernetzer / Initiators vernetzten Polymers bzw. Formulierung, im Falle der Anwesenheit eines solchen in einem Polymer bzw. einer Formulierung. Auch für nicht reaktive Systeme lässt sich die Glastemperatur auf diese Weise bestimmen. Es wird dann als Ergebnis die Stufe in der zweiten Heizkurve ausgewertet.

### Halogengehalte (Ref. 6)

Die Angaben zu Halogengehalten in dieser Schrift beziehen sich auf die Bestimmung mittels ionenchromatographie nach EN 14582:2007.

### Experimente

### Herstellung der Klebefilm-Proben

Zu den eingesetzten Rohstoffen siehe Tabelle 1. Die konkreten Zusammensetzungen der untersuchten Klebefilmproben sind in der Ergebnis-Tabelle 3 ersichtlich. Sofern bei den dort aufgeführten Proben einzelne Komponenten nicht vorhanden sind, entfällt der entsprechende Zumischungsschritt in der nachfolgenden Herstellvorschrift.

Die Herstellung der experimentell untersuchten Proben erfolgte ausgehend von einer kommerziell erhältlichen Dispersion des Matrixpolymers in Wasser. Die weitere Zubereitung und Verarbeitung der Dispersionen erfolgt in Speedmixer^{®}-Bechern unter vermindertem Luftdruck ("moderates Vakuum"). Bei der Herstellung der Dispersionen wird auf eine gute Entschäumung geachtet, um bei Ausstreichung ein sauberes Strichbild zu garantieren. Mittels eines Hochleistungs-Dispergiergeräts (Ultraturrax^{®} T25D+S18) wird der Härter in der jeweiligen Menge als Pulver in die Dispersion gegeben und diese homogenisiert, zum Beispiel für 2 Minuten mit 13.000 bis 18.000 U/min. Der Härter liegt dann pulverförmig dispergiert vor. Anschließend werden das beziehungsweise die Epoxide in die Dispersion eingegeben. Ausgegangen wird bevorzugt ebenfalls von bereits in Wasser dispergierten kommerziell erhältlichen Epoxiden. Diese Epoxid-Dispersionen werden nacheinander bei einer Temperatur von nicht mehr als 28 °C innig mit der Polyurethan-Härter-Dispersion vermengt, wofür jeweils ein Speedmixer mit 2300 U/min für 2 min eingesetzt wird. Anschließend wird - sofern erforderlich - auf analoge Weise der Haftvermittler zudispergiert. Der bei der vorliegend beschriebenen Vorgehensweise gewählte Haftvermittler erfüllte gleichzeitig die Funktion eines Entschäumers.

Mittels eines Verdickers und/oder weitere Zugabe von Wasser kann die Dispersion auf die gewünschte Viskosität sowie die gewünschten Feststoffgehalte eingestellt werden. Zur guten Benetzung auf einen temporären Träger ist es von Vorteil, die Konsistenz der Dispersion joghurt-ähnlich thixotrop einzustellen; weiter vorteilhaft hat sich erfahrungsgemäß eine Einstellung des Feststoffgehalts der Dispersion auf 47 bis 50 % als geeignet erwiesen. Beide Bedingungen wurden für die hergestellten Proben realisiert. Da der Verdicker ausschließlich zur Einstellung einer gewünschten Viskosität dient und zudem in flüssiger Form eingesetzt wird, wird dieser bei der Berechnung des Feststoffanteils als Teil der flüssigen Phase berücksichtigt.

Die Dispersion, die zuvor auf die gewünschte Viskosität eingestellt worden war, wird - nun wieder unter atmosphärischem Druck - mittels Streichbalkens auf Polyethylen-beschichtetes Trennpapier (temporärer Träger) ausgestrichen. Die Trocknung der ausgestrichenen Schichten erfolgt sofort anschließend bei ca. 45 bis 50 °C für 15 bis 20 Minuten im Umluftofen; nach Trocknung liegen Klebefilme mit einer Schichtdicke von 100 µm vor. Die hierzu jeweils erforderliche Dispersionsmenge (feucht) wurde durch einfache Vorversuche und Dreisatzberechnung ermittelt.

Die getrockneten Klebebänder werden ohne weiteres (Test A, B und C), beziehungsweise nach definierter Lagerung (Test D) zur Herstellung der Prüfkörper verwendet.

### Verwendung aprotisch-polarer Lösemittel:

Als weitere Probe R4 wurde folgende Zusammensetzung hergestellt: 50 g Matrixpolymer 4 werden in 200 g aprotisch-polarem Lösemittel (MEK) unter Rühren vorgelöst. Nach vollständigem Lösen werden 34 g Epoxid 3 zugegeben. Nach der vollständigen Homogenisierung werden 16 g des Härters 1 eingewogen. Dabei ist Folgendes zu beobachten: Nach Kontakt des Härters 1 mit der aprotisch-polaren Lösung löst sich der pulverförmige Polyamin-Härter vollständig auf. Die Epoxid-Amin Reaktion-beginnt, die Lösung geliert. Die Herstellung einer Dispersion unter Verwendung eines mikroverkapselten Amin-Epoxy Addukte-Epoxidhärters in aprotisch-polaren Lösung und die entsprechende Weiterverarbeitung zu einem Klebefilm ist nicht möglich.

**Tabelle 1: Eingesetzte Rohstoffe**

| **Bezeichnung*** | **Spezifizierung** | **Darreichung** | **Kommerziell erhältlich** als** |
|---|---|---|---|
| Matrixpolymer 1 | Thermoplastisches Polyurethan | Wässrige Dispersion, Feststoffanteil 45 % | Dispercoll^{®} U 8755, (Fa. Covestro) |
| Matrixpolymer 2 | Styrol-Butadien-Kautschuk | Wässrige Dispersion, Feststoffanteil 67 % | Litex^{®} S83 (Fa. Synthomer) |
| Matrixpolymer 3 | Carboxyliertes Butadien-Acrylonitril-Polymer | Wässrige Dispersion, Feststoffanteil 40 - 43 % | Nychem^{®} XPE 140 (Fa. CVC) |
| Matrixpolymer 4 | Lineares Hydroxylpolyurethan | Feststoff (Granulat) | Desmomelt^{®} 530 (Fa. Bayer MaterialScience) |
| Härter 1 | cycloaliphatisches Amin-Epoxy-Addukt; Reaktionsprodukt aus Bisphenol A und (2-Aminoethyl)cyclohexanamin (Isomerengemisch) | Feinpartikulärer Feststoff, mikroverkapselt Partikelgröße 90% ≤ 5 µm Schmelzpunkt (Kapsel) 78 °C | EH4357S (Fa. Adeka) |
| Härter 2 | aliphatisches Amin-Epoxy-Addukt Reaktionsprodukt aus Bisphenol A und N-(2-amino-ethyl)-1,2-ethandiamin und Epichlorhydrin (mikroverkapselt) | Feinpartikulärer Feststoff, mikroverkapselt Partikelgröße 90% ≤ 5 µm Schmelzpunkt (Kapsel) 72 °C | EH-5030S (Fa. Adeka) |
| Härter 3 | Mischung aus modifiziertem Imidazol und modifiziertem aliphatischem Amin-Epoxy-Addukt | Feinpartikulärer Feststoff, mikroverkapselt Partikelgröße Imidazol 90% ≤ 20 µm; Amin-Epoxy-Addukt 90% ≤ 5 µm | EH 5011 (Fa. Adeka) |
| Härter 4 | Aliphatisches Amin-Phenol-Addukt und Phenol | Feinpartikulärer Feststoff, Partikelgröße 90% ≤ 10 µm | Ancamine^{®} 2337 (Fa. Airproducts) |

**Tabelle 1: Eingesetzte Rohstoffe**

| **Bezeichnung*** | **Spezifizierung** | **Darreichung** | **Kommerziell erhältlich als**** |
|---|---|---|---|
| Epoxid 1 | Festes Epoxyharz Typ 1, EE (Feststoff) 400 - 500 g/mol | Wässrige Dispersion, Feststoffanteil 57 % | Beckopox^{®} EP 2384w/57WA (Fa. Allnex) |
| Epoxid 2 | Flüssiges Epoxidharz EE (Reinstoff) 220 - 260 g/mol | Wässrige Dispersion, Reinstoffanteil 56 % | Beckopox^{®} EP 2340w/56WA (Fa. Allnex) |
| Epoxid 3 | Flüssiges Epoxidharz EE (Reinstoff) 185 - 192 g/mol | Reinstoff, flüssig | Epikote^{®} Resin 828 (Fa. Hexion) |
| Verdicker | Verdickungsmittel auf Polyurethan-Basis | flüssig | Borchigel^{®} 0625 (Fa. Borchers) |
| Haftvermittler | 3-Glycidyloxypropyltriethoxysilan | flüssig | Dynasylan^{®} GLYEO (Fa. Evonik) |
| MEK | Methylethylketon | flüssig | |

| | | | |
|---|---|---|---|
| * nur als beispielhafte Angabe | | | |

### Test A - Ausstoßfestigkeit (Push-out)

Der Push-Out-Test ermöglicht Aussagen über die Verklebungsfestigkeit eines Klebeprodukts in Richtung der Klebschichtnormalen. Bereitgestellt werden ein kreisförmiges erstes Substrat (1) (Polycarbonat, Makrolon 099, Dicke 3 mm) mit Durchmesser 21 mm, ein zweites Substrat (2) (anodisiertes Aluminium, E6EV1, Dicke 1,5 mm) - beispielsweise quadratförmig mit 25 mm Seitenlänge - mit einer kreisförmigen, zentral angeordneten Öffnung (Bohrung) von 9 mm Durchmesser sowie die zu untersuchenden Klebefilmprobe, die ebenfalls kreisförmig mit 21 mm Durchmesser konfektioniert (zugeschnitten oder gestanzt) wurde.

Aus den vorgenannten drei Bauteilen wird ein Prüfkörper hergestellt, indem das Klebeprodukt mit der freien Oberfläche passgenau auf das Substrat (1) auf das Substrat (1) vorlaminiert (bei 55 °C für 15 s) wird. Dann wird der temporäre Träger entfernt und dieser Verbund mit der nun freiliegenden Seite des Klebeproduktes auf das Substrat 2 konzentrisch vorlaminiert (ebenfalls bei 55 °C für 15 s), also derart, dass die kreisrunde Aussparung des Substrats 2 genau mittig über dem kreisrunden ersten Substrat 1 angeordnet ist (Verklebungsfläche somit 282 mm²). Es wird darauf geachtet, dass die Gesamtzeit der Temperatureinwirkung (55 °C) im Vorlaminierprozess 30 s nicht überschreitet. Anschließend wird der Gesamtverbund unter Druck und Temperatureinwirkung verpresst, und zwar nach einem der nachfolgend angegebenen Programme P1 oder P2, wobei der Prüfkörper entsteht.
P1: Verpressbedingung 170°C, 30 sec, 10 bar;
P2: Verpressbedingung 190°C, 10 sec, 10 bar.

Die Prüfkörper werden nach dem Verpressen für 24 h bei 23 °C und 50 % relative Luftfeuchtigkeit (Standard-Prüfklima) gelagert.

Die Austestung erfolgt wie folgt: Eine Zugprüfmaschine wird mit einem zylindrischen Stempel (Stahl, Durchmesser 7 mm) ausgerüstet und der Prüfkörper über Substrat (2) in eine Halterung der Zugprüfmaschine eingespannt, so dass Substrat (1) nur durch die Verklebung gehalten wird und durch hinreichenden Druck durch Lösung der Verklebung abgelöst werden kann. Mittels des zylindrischen Stempels wird durch das Loch in Substrat (2) senkrecht (also parallel entgegengerichtet zum Normalenvektor der Klebeproduktoberfläche) und zentrisch auf die freiliegende Fläche des Klebeproduktes mit einer konstanten Geschwindigkeit von 10 mm/s gedrückt, die Austestungen finden im Standard-Prüfklima statt.

Aufgenommen wird diejenige Kraft, bei der die Verklebung versagt und Substrat (1) von Substrat (2) gelöst (Lösung der Klebeverbindung, erkennbar durch plötzlichen Kraftabfall) wird. Die Kraft wird auf die Verklebungsfläche normiert und das Ergebnis als Push-Out-Festigkeiten in Einheiten von N/mm² angegeben. Die angegebenen Ergebnisse sind jeweils Mittelwerte aus drei Einzelprüfungen.

### Test B - Ausstoßfestigkeit nach Feucht/Wärme-Lagerung

Der zu vermessende, wie unter Test A hergestellte, Prüfköper wird nach der 24stündigen Lagerung im Standard-Prüfklima für weitere 72 h in einem Klimaschrank bei 85 °C und 85 % relativer Feuchtigkeit gelagert. Die Prüfkörper werden nach der Feucht-/Wärmelagerung erneut für 24 h im Standard-Prüfklima gelagert.

Die Austestung der feuchtwärmegelagerten Proben erfolgt in gleicher Weise wie in Test A im Standard-Prüfklima.

### Test C - Ausstoßfestigkeit bei 80°C

Der Prüfkörper wird wie unter Test A beschrieben hergestellt (Verpressung hier allerdings nur nach Programm P1); einschließlich 24stündiger Lagerung im Standard-Prüfklima. Anschließend erfolgt die Messung der Ausstoßfestigkeit in besonderem Prüfklima, nämlich in einer auf 80 °C temperierter Prüfkammer (bei ansonsten atmosphärischen Luftdruck- und Luftfeuchte-Bedingungen), ansonsten analog Test A.

### Test D - Ausstoßfestigkeit nach Kurzzeitlagerung

Zur Bestimmung der Lagerbeständigkeit wird die Lagerung simuliert, indem die getrocknete Klebefilm-Probe für 2 Wochen bei 40 °C / Normdruck gelagert wird.

Nach dieser Alterungssimulation erfolgt analog Test A die Prüfkörperpräparation und Durchführung des Ausstoßtestes.

### Ergebnisse

Die erfindungsgemäße Aufgabe gilt als gelöst, wenn sich Klebebänder bzw. -folien erzeugen lassen, die bei relativ niedrigen Temperaturen und/oder in Kurzzeitaktivierung verklebt werden können, so dass sie insbesondere zur Verklebung von Kunststoffen - zum Beispiel Kunststoff-Kunststoff oder Metall-Kunststoff-Verbindungen - geeignet sind, ohne dass diese Substrate hitzegeschädigt werden. Gleichzeitig sollen sie aber bei Raumtemperatur über längere Zeiträume lagerfähig (also latentreaktiv) sein, beispielweise über einige Wochen, hier simuliert durch den Kurzzeitlagerungstest D, der erfahrungsgemäß Rückschlüsse auf die Langzeitlagerungsfähigkeit zulässt.

Dies ist für die als erfindungsgemäß gekennzeichneten Beispiele in zufriedenstellender Weise gelungen.

Je nach beabsichtigtem Anwendungsgebiet und damit verbundenen Anforderungen ist es vorteilhaft, wenn die Klebebänder weitere Eigenschaften aufweisen, wie dies im Rahmen dieser Schrift dargestellt ist. Die für bevorzugte, mehr bevorzugte und äußerst bevorzugte Ausführungen der Erfindung jeweils vorteilhaft zu erfüllenden Anforderungen sind in der folgenden Tabelle 2 skizziert, wobei innerhalb jeder dieser Eingruppierungen - Spalten - eine weitere Feineinteilung stattfinden kann.

**Tabelle 2**

| | **Bevozugte Werte (Spalte 1)** | **Sehr bevorzugte Werte (Spalte 2)** | **Äußerst bevorzugte Werte (Spalte 3)** |
|---|---|---|---|
| **Ausstoßfestigkeit Initial (Test A)** | ≥ 1,5 N/mm² | ≥ 2,5 N/mm² | ≥ 3,5 N/mm² |
| **Ausstoßfestigkeit nach Feucht/Wärme-Lagerung (Test B)** | ≥ 1,3 N/mm² | ≥ 2,1 N/mm² | ≥ 3,5 N/mm² |
| **Ausstoßfestigkeit bei 80°C (Test C)** | ≥ 0,4 N/mm² | ≥ 0,8 N/mm² | ≥ 1,0 N/mm² |
| **Ausstoßfestigkeit nach Kurzzeitlagerung (Test D)** | ≥ 1,0 N/mm² | ≥ 2,0 N/mm² | ≥ 2,5 N/mm² |

Zur jeweiligen Eingruppierung in "bevorzugt", "mehr bevorzugt" oder "äußerst bevorzugt" sollte vorteilhaft zumindest der Wert für die initiale Ausstoßfestigkeit (Test A) erfüllt sein sollte. Besser erfüllt ist die Eingruppierung, wenn zudem der Wert für die Kurzzeitlagerung (Test D) erfüllt wird. Für das jeweilige Anwendungsgebiet kann zudem in jeder Spalte vorteilhaft noch der Wert für die Feucht-Wärme-Lagerung (Test B) und/oder die Ausstoßfestigkeit bei 80 °C (Test C) erfüllt sein.

Insofern können die jeweiligen Zeilen unabhängig voneinander verstanden werden, sofern zum Beispiel das Feucht-Wärme-Verhalten in einem bestimmten Fall keine Rolle spielt, kann ein Klebeband äußerst bevorzugt auch schon dann eingesetzt werden, wenn die Werte zur initialen Ausstoßfestigkeit und zur Ausstoßfestigkeit nach Kurzzeitlagerung erfüllt sind, die Ausstoßfestigkeit nach Feucht-Wärme-lagerung aber nicht den hierfür definierten Wert angibt. Die am meisten bevorzugten Klebebänder - weil am individuellsten einsetzbar - sind diejenigen, bei denen alle Werte im als äußerst bevorzugt angegebenen Parameterbereich liegen.

Die Ergebnisse der experimentellen Untersuchungen sind in der folgenden Tabelle 3 wiedergegeben. Sofern ein latentreaktiver Klebefilm herstellbar ist, ist das Beispiel erfindungsgemäß **(e);** ansonsten nicht erfindungsgemäß **(ne).**
(-): Werte nicht ermittelt.

**Tabelle 3: Ergebnisse**

| **Probe** | | **R1** | **R2** | **R3** | **R4** |
|---|---|---|---|---|---|
| | | | | | |
| Matrixpolymer 1 | | 100 | 100 | 79,41 | 50,00 |
| Matrixpolymer 2 | | 0 | 0 | 0 | 0 |
| Matrixpolymer 3 | | 0 | 0 | 0 | 0 |
| Matrixpolymer 4 | | 0 | 0 | 0 | 0 |
| Härter 1 | | 0 | 0 | 0 | 16 |
| Härter 2 | | 0 | 0 | 0 | 0 |
| Härter 3 | | 0 | 0 | 0 | 0 |
| Härter 4 | | 0 | 0 | 10,69 | 0 |
| Epoxid 1 | | 0 | 0 | 6,85 | 0 |
| Epoxid 2 | | 0 | 0 | 3,05 | 0 |
| Epoxid 3 | | 0 | 0 | 0 | 34 |
| | | | | | |
| Verdicker | | 0 | 0,07 | 0 | 0 |
| Haftvermittler | | 0 | 4,54 | 0 | 0 |
| Wasser | | 122,0 | 122,4 | 103,6 | 0 |
| MEK | | 0 | 0 | 0 | 200,0 |
| | | | | | |

| Latentreaktiver Klebefilm herstellbar? | | Film nicht reaktiv ***(ne)*** | Film nicht reaktiv ***(ne)*** | Dispersion verklumpt, keine Filmbildung ***(ne)*** | Frühzeitige Härtung bereits in Lösung ***(ne)*** |
|---|---|---|---|---|---|
| Test A [N/mm²] | P1 | 2,4 | 2,5 | keine weiteren Messungen möglich | keine weiteren Messungen möglich |
| | P2 | 1,7 | 1,5 | | |
| Test B [N/mm²] | P1 | 0 | 4,0 | | |
| | P2 | 0 | 2,0 | | |
| Test C [N/mm²] | P1 | 0,8 | 1,1 | | |
| Test D [N/mm²] | P1 | - | 1,2 | | |
| | P2 | - | 1,4 | | |

**Tabelle 3: Ergebnisse**

| **Probe** | | **B1** | **B2** | **B3** | **B4** | **B5** | **B6** | **B7** | **B8** | **B9** |
|---|---|---|---|---|---|---|---|---|---|---|
| | | | | | | | | | | |
| Matrixpolymer 1 | | 0 | 0 | 50,48 | 74,38 | 84,15 | 84,95 | 86,05 | 79,80 | 82,97 |
| Matrixpolymer 2 | | 0 | 82,92 | 0 | 0 | 0 | 0 | 0 | 0 | 0 |
| Matrixpolymer 3 | | 82,32 | 0 | 0 | 0 | 0 | 0 | 0 | 0 | 0 |
| Matrixpolymer 4 | | 0 | 0 | 0 | 0 | 0 | 0 | 0 | 0 | 0 |
| Härter 1 | | 6,41 | 5,75 | 13,53 | 6,92 | 4,89 | 3,30 | 0 | 0 | 5,75 |
| Härter 2 | | 0 | 0 | 0 | 0 | 0 | 0 | 2,53 | 0 | 0 |
| Härter 3 | | 0 | 0 | 0 | 0 | 0 | 0 | 0 | 9,14 | 0 |
| Härter 4 | | 0 | 0 | 0 | 0 | 0 | 0 | 0 | 0 | 0 |
| Epoxid 1 | | 7,52 | 7,52 | 24,26 | 12,55 | 3,72 | 11,75 | 11,42 | 7,38 | 7,52 |
| Epoxid 2 | | 3,76 | 3,76 | 11,91 | 6,16 | 7,24 | 0 | 0 | 3,69 | 3,76 |
| Epoxid 3 | | 0 | 0 | 0 | 0 | 0 | 0 | 0 | 0 | 0 |
| | | | | | | | | | | |
| Verdicker | | 0,21 | 0 | 0,06 | 0,07 | 0,07 | 0,07 | 0,07 | 0 | 0 |
| Haftvermittler | | 0 | 0 | 3,87 | 4,19 | 2,14 | 2,14 | 2,16 | 0 | 0 |
| Wasser | | 108,6 | 108,3 | 89,4 | 105,4 | 111,5 | 118,5 | 113,9 | 104,9 | 108,9 |
| MEK | | 0 | 0 | 0 | 0 | 0 | 0 | 0 | 0 | 0 |
| | | | | | | | | | | |

| Latentreaktiver Klebefilm herstellbar? | | ja ***(e)*** | ja ***(e)*** | ja ***(e)*** | ja ***(e)*** | ja ***(e)*** | ja ***(e)*** | ja ***(e)*** | ja ***(e)*** | ja ***(e)*** |
|---|---|---|---|---|---|---|---|---|---|---|
| Test A [N/mm²] | P1 | 1,3 | 1,0 | 4,0 | 4,2 | 4,3 | 3,6 | 3,0 | 2,4 | 4,1 |
| | P2 | 1,0 | 0,8 | 2,5 | 3,1 | 4,0 | 3,6 | 2,9 | 2,3 | 3,3 |
| Test B [N/mm²] | P1 | - | - | 1,2 | 2,3 | 3,8 | 2,8 | 4,4 | 1,8 | 2,6 |
| | P2 | - | - | 2,0 | 1,8 | 3,6 | 2,8 | 3,8 | 1,5 | 2,1 |
| Test C [N/mm²] | P1 | - | - | 1,3 | 1,3 | 1,3 | 2,3 | 2,1 | 1,0 | - |
| Test D [N/mm²] | P1 | 1,2 | 1,0 | - | - | 1,8 | 2,2 | 2,2 | 2,2 | 2,8 |
| | P2 | 1,0 | 0,7 | - | - | 1,2 | 2,2 | 2,1 | 2,2 | 2,9 |

**Tabelle 3: Ergebnisse**

| **Probe** | | **B10** | **B11** | **B12** | **B13** | **B14** | **B15** | **B16** | **B17** | **B18** |
|---|---|---|---|---|---|---|---|---|---|---|
| | | | | | | | | | | |
| Matrixpolymer 1 | | 84,27 | 84,29 | 93,91 | 86,91 | 75,70 | 75,18 | 76,39 | 85,60 | 85,31 |
| Matrixpolymer 2 | | 0 | 0 | 0 | 0 | 0 | 0 | 0 | 0 | 0 |
| Matrixpolymer 3 | | 0 | 0 | 0 | 0 | 0 | 0 | 0 | 0 | 0 |
| Matrixpolymer 4 | | 0 | 0 | 0 | 0 | 0 | 0 | 0 | 0 | 0 |
| Härter 1 | | 4,86 | 4,85 | 1,38 | 1,84 | 5,53 | 2,98 | 2,93 | 3,28 | 3,35 |
| Härter 2 | | 0 | 0 | 0 | 0 | 0 | 0 | 0 | 0 | 0 |
| Härter 3 | | 0 | 0 | 0 | 0 | 0 | 0 | 0 | 0 | 0 |
| Härter 4 | | 0 | 0 | 0 | 0 | 0 | 0 | 0 | 0 | 0 |
| Epoxid 1 | | 3,85 | 3,68 | 4,70 | 11,25 | 18,77 | 21,84 | 9,91 | 11,12 | 11,34 |
| Epoxid 2 | | 7,02 | 7,18 | 0 | 0 | 0 | 0 | 10,78 | 0 | 0 |
| Epoxid 3 | | 0 | 0 | 0 | 0 | 0 | 0 | 0 | 0 | 0 |
| | | | | | | | | | | |
| Verdicker | | 0 | 0,14 | 0,07 | 0,07 | 0,07 | 0,07 | 0,07 | 0,07 | 0,07 |
| Haftvermittler | | 0 | 0 | 4,46 | 4,39 | 4,22 | 4,26 | 4,28 | 0 | 4,35 |
| Wasser | | 110,4 | 111,7 | 118,5 | 114,9 | 106,8 | 108,5 | 109,5 | 113,2 | 113,0 |
| MEK | | 0 | 0 | 0 | 0 | 0 | 0 | 0 | 0 | 0 |
| | | | | | | | | | | |

| Latentreaktiver Klebefilm herstellbar? | | ja ***(e)*** | ja ***(e)*** | ja ***(e)*** | ja ***(e)*** | ja ***(e)*** | ja ***(e)*** | ja ***(e)*** | ja ***(e)*** | ja ***(e)*** |
|---|---|---|---|---|---|---|---|---|---|---|
| Test A [N/mm²] | P1 | 3,6* | 3,7 | 3,8 | 3,8 | 4,1 | 3,5 | 4,3 | 4,1 | 3,6 |
| | P2 | 3,5* | 3,7 | 2,8 | 3,3 | 3,6 | 2,9 | 5,3 | 2,1 | 4,0 |
| Test B [N/mm²] | P1 | 2,7* | 2,9 | 4,7 | 4,8 | 3,4 | 2,1 | 5,3 | 2,7 | 4,0 |
| | P2 | 3,0* | 3,1 | 4,6 | 4,1 | 3,4 | 2,3 | 4,4 | 1,8 | 4,0 |
| Test C [N/mm²] | P1 | - | - | 1,2 | 1,2 | 1,3 | 1,1 | 1,2 | 1,2 | 1,2 |
| Test D [N/mm²] | P1 | - | - | 1,9 | 2,4 | 2,5 | 2,8 | 3,1 | 2,8 | 2,9 |
| | P2 | - | - | 1,4 | 2,0 | 2,1 | 2,5 | 2,6 | 2,1 | 3,0 |

| | | | | | | | | | | |
|---|---|---|---|---|---|---|---|---|---|---|
| * an gleichmäßig gebildetem Filmstück gemessen | | | | | | | | | | |

Aus den Experimenten lassen sich insbesondere die folgenden Erkenntnisse ableiten:
- Die Dispersion des reinen Matrixpolymers (thermoplastisches PU) (Beispiele R1, R2) ließ sich erfindungsgemäß verarbeiten und als Film ausstreichen, aber aufgrund des fehlenden Reaktivsystems konnte kein (latent)reaktiver Klebefilm erhalten werden. Im DSC nach Ref. 2 wird keine Aktivierungsreaktion detektiert. Die ermittelten Werte in den Experimenten resultieren aus der puren Eigenschaft des Matrixpolymers als Schmelzkleber. Die erfindungsgemäße Aufgabe ist somit nicht erfüllt.
- Der Einsatz eines Amin-Phenol-Addukts (Probe R3) zeigt, dass dieser Härter erfindungsgemäß nicht geeignet ist. Bereits bei der Eingabe in das Dispersionsmittel Wasser kommt es zum Verklumpen, eine Dispersion kann nicht hergestellt werden. Dementsprechend war es nicht möglich, aus dieser Zubereitung latentreaktive Klebefilme zu erzeugen.
- Die Herstellung einer Dispersion in Probe R4 unter Verwendung eines mikroverkapselten Amin-Epoxy-Addukt-Epoxidhärters in aprotisch-polarer Lösung und die entsprechende Weiterverarbeitung zu einem Klebefilm ist nicht möglich, so dass die erfindungsgemäß gestellte Aufgabe, latentreaktive Klebebänder bereitzustellen, hier nicht gelöst wurde.

Vergleich der Matrixpolymere:
- Mit Kautschuken als Matrixpolymer (Probe B1, B2) lassen sich grundsätzlich latentreaktive Klebebänder erhalten, so dass die grundsätzliche erfindungsgemäße Aufgabe erfüllt ist. Die Benetzung der Oberfläche des temporären Trägers ist nicht so gut wie bei Verwendung des Matrixpolymers 1 (Polyurethan): Die gemessenen Werte der Proben können mit denen, bei denen thermoplastisches Polyurethan als Matrixpolymer eingesetzt wurde, nicht mithalten (vergleiche zum Beispiel Probe B9 mit ansonsten vergleichbarer Grundzusammensetzung).

Einfluss des eingesetzten Härters
- Wie eingangs beschrieben wurde die erfindungsgemäße Aufgabe der Herstellung eines latentreaktiven Klebebandes gelöst, wenn die erfindungsgemäß als geeignet beschriebenen Härter eingesetzt wurden. Hier wurden exemplarisch Experimente mit mikroverkapselten Amin-Epoxy-Addukten und Mischungen enthaltend mikroverkapselte Amin-Epoxy-Addukte gewählt. Alle hiermit durchgeführten Experimente führten zu wässrigen Dispersionen und ausstreichbaren Klebebändern mit latentreaktiven Eigenschaften (siehe Proben B1 bis B18); die in der DSC-Messung (Ref. 2) entsprechende Aktivierungsreaktions-Exothermie zeigen.
- Bei einem Vergleich der Proben B6 und B7 zeigt sich bei ansonsten vergleichbaren Bedingungen die Auswirkung dessen, ob als Härter ein Amin-Epoxy-Addukt mit linear-aliphatischen Aminen (Probe B7) oder mit cycloaliphatischen Aminen (Probe B6) eingesetzt wird. Während es für die Ausstoßfestigkeit nach einem Tag Lagerung im Prüfklima vorteilhaft ist, den cycloaliphatischen Härter einzusetzen, sind diese Werte bei Verwendung des linear-aliphatischen Härters tendentiell eher schlechter. Der linearaliphatische Härter hat hingegen den Vorteil, dass er zu Klebeprodukten führt, die nach Feucht-Wärme-Lagerung noch eine hervorragende Ausstoßfestigkeit besitzen. Durch geeignete Wahl des Härters lassen sich die latentreaktiven Klebebandprodukte so optimiert für das jeweilige Einsatzgebiet erzeugen.
- Probe B8 zeigt, dass eine Härtermischung aus erfindungsgemäßen Härtern und solchen, die anderer Natur sind (modifiziertes Imidazol), grundsätzlich ebenfalls zu Produkten führen, die die erfindungsgemäße Aufgabe - Bereitstellung eines latentreaktiven Klebebandes - erfüllen. Vergleiche hierzu zum Probe B8 mit Probe B9 - der höhere Anteil des Härters in Probe B8 resultiert aus der Tatsache, den Anteil des erfindungsgemäßen Härters auf einen vergleichbaren Wert zu bringen. Es zeigt sich allerdings, dass die 24-Stunden-Ausstoßfestigkeit (Test A) auf geringerem Niveau liegen, zudem konnte beobachtet werden, dass die latentreaktiven Klebeprodukte rauere Oberflächen aufwiesen, da die nicht erfindungsgemäßen Imidazolhärter eine höhere Partikelgröße (im Mittel 20 µm) aufwiesen. Dies wirkt sich ebenfalls nachteilig auf die Eigenschaften des Klebebandes aus.

Einfluss von Additiven
- Der Einsatz eines Verdickers verbessert die Ausbildung eines gleichmäßigen Films (homogene Oberfläche, konstante Schichtdicke, ohne Fehlstellen etc). Ohne Einsatz eines Verdickers ist dies für eine Vielzahl der hergestellten Dispersionen nicht oder nur mit verminderter Qualität möglich. Aus einem ohne Verdicker hergestellten Film (Probe B10) wurde ein weitgehend gleichmäßig ausgebildetes und daher für die Messung verwendbares Flächenstück ausgewählt und den Tests unterzogen, im Vergleich zu der ansonsten identisch hergestellten Probe B11 zeigt sich, dass der Verdicker sich nicht negativ auf die untersuchten Eigenschaften des Klebefilms auswirkt.
- Der Einsatz eines Haftvermittlers (Glyeo) führt zu einer verbesserten Feucht-WärmeBeständigkeit des Klebebandes (vergleiche beispielweise Proben B5 mit B11 und Proben B17 mit B18).
- Der Haftvermittler führt zu einer Erhöhung der Adhäsion des Klebebandes auf dem Untergrund und verhindert insbesondere das Unterkriechen durch Feuchtigkeit.

Einfluss der eingesetzten Epoxide
- Die Proben B5 und B6 zeigen im Vergleich den Einfluss der Wahl der Epoxide: Während in Probe B6 ausschließlich ein festes Typ-1-Epoxidharz verwendet wurde, nutzt Probe B5 eine Mischung aus einem festen und einem flüssigen Epoxidharz. Da die flüssigen Epoxide einen höheren EE-Wert besitzen, wurde die Härtermenge entsprechend angepasst, um auf das vergleichbare Verhältnis an Epoxidgruppen zu Amingruppen zu kommen.
Es konnte beobachtet werden, dass der Ersatz eines Teils der festen Epoxide durch flüssige Epoxide das Feucht-Wärme-Verhalten des Klebebandes optimiert. Die ausschließliche Verwendung des festen Epoxidharz führt hier hingegen zu einem etwas lagerstabileren Klebfilm (siehe Test D).

Optimierte latentreaktive Klebemassen
- Latentreaktive Klebemassen, die in allen gewünschten Eigenschaften ein optimales Verhalten zeigen, erhält man durch eine Feinabstimmung der Anteile aller Basiskomponenten aufeinander, wie dies in der vorliegenden Schrift als vorteilhafte Zusammensetzung dargestellt ist. Experimentell konnte dies beispielsweise in den Proben B16 und B18 verifiziert werden, die durchgängig in allen Tests optimale Ergebnisse (äußerst bevorzugte Parameterbereiche) liefern.
Insbesondere für die Feuchtigkeitsbeständigkeit dieser Beispiele ist es vorteilhaft, auch den Haftvermittler in den als bevorzugt angegebenen Anteilen einzusetzen, vergleiche zu diesem Einfluss etwa die Proben B17 und B18 miteinander.

## Patentansprüche

1. Dispersion umfassend ein oder mehrere protische Lösemittel als Dispersionsmittel sowie als darin dispergierte Basiskomponenten
- ein oder mehrere Filmbildner-Matrixpolymere,
- ein oder mehrere Epoxide,
- zumindest eine Sorte einer in den Epoxiden nicht löslichen, modifizierten Verbindung des Polyamin-Addukt-Typs,
wobei das zumindest eine modifizierte Polyamin-Addukt in partikulärer Form dispergiert ist, wobei 90 % der Partikel eine mittels Laserdiffraktometrie bestimmte Partikelgröße im Bereich von 0,1 bis 10 µm aufweisen,
wobei als zumindest eine Sorte einer modifizierten Verbindung des Polyamin-Addukt-Typs ausschließlich oder teilweise Polyamin-Epoxy-Addukt(e) und/oder Polyamin-Isocyanat-Addukt(e) (einschließlich Polyamin-Harnstoff-Addukt(e)) gewählt werden.

2. Dispersion nach Anspruch 1, **dadurch gekennzeichnet, dass**
als Dispersionsmittel zu mehr als 90 Gew.-%, insbesondere ausschließlich, Wasser verwendet wird.

3. Dispersion nach einem der vorstehenden Ansprüche, **dadurch gekennzeichnet, dass** das zumindest eine modifizierte Polyamin-Addukt eine Aktivierungstemperatur zur Freisetzung des reaktiven Polyamin-Addukts im Bereich von 60 bis 95 °C besitzt.

4. Dispersion nach einem der vorstehenden Ansprüche, **dadurch gekennzeichnet, dass** als Polyamin-Addukt ganz oder teilweise das Reaktionsprodukt aus Bisphenol-A-Diglycidylether und einem aliphatischen Amin mit mindestens 2 Amingruppen eingesetzt wird.

5. Dispersion nach Anspruch 4, **dadurch gekennzeichnet, dass**
das aliphatischen Amin mit mindestens 2 Amingruppen ein cycloaliphatisches Amin ist.

6. Dispersion nach einem der vorstehenden Ansprüche, **dadurch gekennzeichnet, dass** als Polyamin-Addukt ganz oder teilweise das Reaktionsprodukt aus Bisphenol-A-diglycidylether und (2-Aminoethyl)cyclohexanamin eingesetzt wird.

7. Dispersion nach einem der vorstehenden Ansprüche, **dadurch gekennzeichnet, dass** das zumindest eine modifizierte Polyamin-Addukt in Form partikulärer Mikrokapseln mit einem mittleren Partikeldurchmesser von 0,1 bis 10 µm vorliegt.

8. Dispersion nach den Ansprüchen 4 und 5, **dadurch gekennzeichnet, dass** die Mikrokapseln jeweils aus
o einem Kern enthaltend das Reaktionsprodukt aus Bisphenol-A-Diglycidylether und (2-Aminoethyl)cyclohexanamin und
o einer Hülle aus einem Material mit einem Schmelzpunkt von mindestens 60 °C gebildet sind.

9. Dispersion nach einem der vorstehenden Ansprüche, **dadurch gekennzeichnet, dass** als Matrixpolymer(e) ein oder mehrere thermoplastische Polymere mit einem Erweichungspunkt nach ASTM E28-14 zwischen 40 und 120 °C eingesetzt werden.

10. Dispersion nach einem der vorstehenden Ansprüche, **dadurch gekennzeichnet, dass** als Epoxid(e) ein oder mehrere epoxidgruppenhaltige Verbindungen mit einem Epoxid-Äquivalent (EE) von 150 bis 1.500 g/mol eingesetzt werden.

11. Dispersion nach einem der vorangehenden Ansprüche, **dadurch gekennzeichnet, dass** als Epoxide zumindest zwei epoxidgruppenhaltige Verbindungen eingesetzt werden, und zwar
- zumindest eine epoxidgruppenhaltige Verbindung mit einem Epoxid-Äquivalent (EE) von 150 bis 225 g/mol und zumindest eine epoxidgruppenhaltige Verbindung mit einem Epoxid-Äquivalent (EE) von 230 bis 400 g/mol,
oder
- zumindest eine epoxidgruppenhaltige Verbindung mit einem Epoxid-Äquivalent (EE) von 150 bis 225 g/mol und zumindest eine epoxidgruppenhaltige Verbindung mit einem Epoxid-Äquivalent (EE) von 400 bis 1.500 g/mol,
oder
- zumindest eine epoxidgruppenhaltige Verbindung mit einem Epoxid-Äquivalent (EE) von 230 bis 400 g/mol und zumindest eine epoxidgruppenhaltige Verbindung mit einem Epoxid-Äquivalent (EE) von 400 bis 1.500 g/mol,
oder
- zumindest eine epoxidgruppenhaltige Verbindung mit einem Epoxid-Äquivalent (EE) von 150 bis 225 g/mol und zumindest eine epoxidgruppenhaltige Verbindung mit einem Epoxid-Äquivalent (EE) von 230 bis 400 g/mol und zumindest eine epoxidgruppenhaltige Verbindung mit einem Epoxid-Äquivalent (EE) von 400 bis 1.500 g/mol.

12. Dispersion nach einem der vorstehenden Ansprüche, **dadurch gekennzeichnet, dass** die Basiskomponenten zu folgenden Anteilen in der Dispersion vorliegen, jeweils bezogen auf die Gesamtheit der Basiskomponenten:
(A) 48 bis 98,5 Gew.-% an Matrixpolymer(en),
(B) 1 bis 44 Gew.-% an Epoxid(en),
(C) 0,5 bis 8 Gew.-% an Polyamin-Addukt(en).

13. Dispersion nach einem der vorangehenden Ansprüche, umfassend weiterhin Haftvermittler in dispergierter Form, insbesondere zu einem Anteil von bis zu 5 Gew.-Teilen auf 100 Gewichtsteile Basiskomponenten.

14. Dispersion nach Anspruch 12, **dadurch gekennzeichnet, dass**
als Haftvermittler ausschließlich oder zum Teil 3-Glycidyloxypropyltriethoxysilan eingesetzt wird.

15. Dispersion nach einem der vorangehenden Ansprüche, umfassend zusätzlich weitere Komponenten - wie Klebharze, Verdicker, Füllstoffe, Farbstoffe, Haftvermittler, Entschäumer, von Epoxiden unterschiedliche Reaktivharze - in dispergierter Form.

16. Dispersion nach einem der vorangehenden Ansprüche, **dadurch gekennzeichnet, dass** die Menge der weiteren Komponenten bis zu 100 Gew.-Teile auf 100 Gew.-Teile der Basiskomponenten beträgt.

17. Dispersion nach einem der vorangehenden Ansprüche, **dadurch gekennzeichnet, dass** als Matrixpolymer thermoplastisches Polyurethan eingesetzt wird.

18. Klebemassenschicht erhältlich durch Beschichtung einer Dispersion nach einem der vorangehenden Ansprüche und anschließende Trocknung, insbesondere bis zu einem Restdispersionsmittelgehalt von nicht mehr als 5 Gew.-%, bezogen auf die Klebmassenschicht.

## Claims

1. Dispersion comprising one or more protic solvents as dispersion medium and also, as base components dispersed therein,
- one or more film-former matrix polymers,
- one or more epoxides,
- at least one kind of a modified compound of the polyamine adduct type which is insoluble in the epoxides,
where the at least one modified polyamine adduct is in dispersion in particulate form, with 90% of the particles having a particle size in the range from 0.1 to 10 µm as determined by laser diffractometry,
where said at least one kind of a modified compound of the polyamine adduct type selected comprises, exclusively or partially, polyamine-epoxy adduct(s) and/or polyamine-isocyanate adduct(s) (including polyamine-urea adduct(s)).

2. Dispersion according to Claim 1, **characterized in that** the dispersion medium used comprises water to an extent of more than 90 wt%, more particularly exclusively.

3. Dispersion according to either of the preceding claims, **characterized in that**
the at least one modified polyamine adduct possesses an activation temperature for release of the reactive polyamine adduct in the range from 60 to 95°C.

4. Dispersion according to any of the preceding claims, **characterized in that**
said polyamine adduct used comprises, wholly or partially, the reaction product of bisphenol A diglycidyl ether and an aliphatic amine having at least 2 amine groups.

5. Dispersion according to Claim 4, **characterized in that** the aliphatic amine having at least 2 amine groups is a cycloaliphatic amine.

6. Dispersion according to any of the preceding claims, **characterized in that**
said polyamine adduct used comprises, wholly or partially, the reaction product of bisphenol A diglycidyl ether and (2-aminoethyl)cyclohexanamine.

7. Dispersion according to any of the preceding claims, **characterized in that**
the at least one modified polyamine adduct is in the form of particulate microcapsules having an average particle diameter of 0.1 to 10 µm.

8. Dispersion according to Claims 4 and 5, **characterized in that**
the microcapsules are each formed of
o a core comprising the reaction product of bisphenol A diglycidyl ether and (2-aminoethyl)cyclohexanamine and
o a shell composed of a material having a melting point of at least 60°C.

9. Dispersion according to any of the preceding claims, **characterized in that**
said matrix polymer(s) used comprise(s) one or more thermoplastic polymers having a softening point to ASTM E28-14 of between 40 and 120°C.

10. Dispersion according to any of the preceding claims, **characterized in that**
said epoxide(s) used comprise(s) one or more epoxide-group-containing compounds having an epoxide equivalent (EE) of 150 to 1500 g/mol.

11. Dispersion according to any of the preceding claims, **characterized in that**
said epoxides used comprise at least two epoxide-group-containing compounds,
and specifically
- at least one epoxide-group-containing compound having an epoxide equivalent (EE) of 150 to 225 g/mol and at least one epoxide-group-containing compound having an epoxide equivalent (EE) of 230 to 400 g/mol,
or
- at least one epoxide-group-containing compound having an epoxide equivalent (EE) of 150 to 225 g/mol and at least one epoxide-group-containing compound having an epoxide equivalent (EE) of 400 to 1500 g/mol,
or
- at least one epoxide-group-containing compound having an epoxide equivalent (EE) of 230 to 400 g/mol and at least one epoxide-group-containing compound having an epoxide equivalent (EE) of 400 to 1500 g/mol,
or
- at least one epoxide-group-containing compound having an epoxide equivalent (EE) of 150 to 225 g/mol and at least one epoxide-group-containing compound having an epoxide equivalent (EE) of 230 to 400 g/mol and at least one epoxide-group-containing compound having an epoxide equivalent (EE) of 400 to 1500 g/mol.

12. Dispersion according to any of the preceding claims, **characterized in that**
the base components are present in the dispersion in the following fractions, based in each case on the entirety of the base components:
(A) 48 to 98.5 wt% of matrix polymer(s),
(B) 1 to 44 wt% of epoxide(s),
(C) 0.5 to 8 wt% of polyamine adduct(s).

13. Dispersion according to any of the preceding claims, further comprising adhesion promoter(s) in dispersed form, more particularly in a fraction of up to 5 parts by weight per 100 parts by weight of base components.

14. Dispersion according to Claim 12, **characterized in that**
said adhesion promoter(s) used comprise(s), exclusively or in part, 3-glycidyloxypropyltriethoxysilane.

15. Dispersion according to any of the preceding claims, additionally comprising
further components - such as tackifier resins, thickeners, fillers, dyes, adhesion promoters, defoamers, non-epoxide reactive resins - in dispersed form.

16. Dispersion according to any of the preceding claims, **characterized in that**
the amount of the further components is up to 100 parts by weight per 100 parts by weight of the base components.

17. Dispersion according to any of the preceding claims, **characterized in that**
said matrix polymer used comprises thermoplastic polyurethane.

18. Layer of adhesive composition obtainable by coating using a dispersion according to any of the preceding claims, and subsequent drying, more particularly down to a residual dispersion medium content of not more than 5 wt%, based on the layer of adhesive composition.

## Revendications

1. Dispersion comprenant un ou plusieurs solvants protiques en tant qu'agent de dispersion ainsi que des composants de base dispersés dans celle-ci
- un ou plusieurs polymères de matrice d'agents de formation de film,
- un ou plusieurs époxydes,
- au moins une sorte d'un composé modifié, non soluble dans les époxydes, du type adduit de polyamine,
l'au moins un adduit de polyamine modifié étant dispersé sous forme particulaire, 90 % des particules présentant une taille de particule, déterminée au moyen d'une diffractométrie laser, dans la plage de 0,1 à 10 pm,
dans laquelle, en tant qu'au moins une sorte d'un composé modifié du type adduit de polyamine, exclusivement ou partiellement un ou plusieurs adduits de polyamine-époxy et/ou adduits de polyamine-isocyanate (y compris adduit(s) de polyamine-urée) sont choisis.

2. Dispersion selon la revendication 1, **caractérisée en ce que** de l'eau est utilisée à raison de plus de 90 % en poids, en particulier exclusivement, en tant qu'agent de dispersion.

3. Dispersion selon l'une quelconque des revendications précédentes, **caractérisée en ce que** l'au moins un adduit de polyamine modifié possède une température d'activation pour la libération de l'adduit de polyamine réactif dans la plage de 60 à 95 °C.

4. Dispersion selon l'une quelconque des revendications précédentes, **caractérisée en ce qu'**en tant qu'adduit de polyamine, le produit de réaction de l'éther de diglycidyle de bisphénol A et d'une amine aliphatique comportant au moins 2 groupes amine est utilisé totalement ou partiellement.

5. Dispersion selon la revendication 4, **caractérisée en ce que** l'amine aliphatique comportant au moins 2 groupes amine est une amine cycloaliphatique.

6. Dispersion selon l'une quelconque des revendications précédentes, **caractérisée en ce qu'**en tant qu'adduit de polyamine le produit de réaction de l'éther de diglycidyle de bisphénol A et de la (2-aminoéthyl)cyclohexanamine est utilisé totalement ou partiellement.

7. Dispersion selon l'une quelconque des revendications précédentes, **caractérisée en ce que** l'au moins un adduit de polyamine modifié est présent sous forme de microcapsules particulaires dotées d'un diamètre moyen de particule de 0,1 à 10 µm.

8. Dispersion selon les revendications 4 et 5, **caractérisée en ce que** les microcapsules sont formées à chaque fois à partir de
o un noyau contenant le produit de réaction de l'éther de diglycidyle de bisphénol A et de la (2-aminoéthyl)cyclohexanamine et
o une enveloppe d'un matériau doté d'un point de fusion d'au moins 60 °C.

9. Dispersion selon l'une quelconque des revendications précédentes, **caractérisée en ce qu'**en tant que polymère(s) de matrice un ou plusieurs polymères thermoplastiques dotés d'un point de ramollissement selon la norme ASTM E28-14 compris entre 40 et 120 °C sont utilisés.

10. Dispersion selon l'une quelconque des revendications précédentes, **caractérisée en ce qu'**en tant qu'époxyde(s) un ou plusieurs composés contenant des groupes époxyde dotés d'un équivalent d'époxyde (EE) de 150 à 1 500 g/mole sont utilisés.

11. Dispersion selon l'une quelconque des revendications précédentes, **caractérisée en ce qu'**en tant qu'époxydes au moins deux composés contenant des groupes époxyde sont utilisés, c'est-à-dire
- au moins un composé contenant un groupe époxyde doté d'un équivalent d'époxyde (EE) de 150 à 225 g/mole et au moins un composé contenant un groupe époxyde doté d'un équivalent d'époxyde (EE) de 230 à 400 g/mole,
ou
- au moins un composé contenant un groupe époxyde doté d'un équivalent d'époxyde (EE) de 150 à 225 g/mole et au moins un composé contenant un groupe époxyde doté d'un équivalent d'époxyde (EE) de 400 à 1 500 g/mole,
ou
- au moins un composé contenant un groupe époxyde doté d'un équivalent d'époxyde (EE) de 230 à 400 g/mole et au moins un composé contenant un groupe époxyde doté d'un équivalent d'époxyde (EE) de 400 à 1 500 g/mole,
ou
- au moins un composé contenant un groupe époxyde doté d'un équivalent d'époxyde (EE) de 150 à 225 g/mole et au moins un composé contenant un groupe époxyde doté d'un équivalent d'époxyde (EE) de 230 à 400 g/mole et au moins un composé contenant un groupe époxyde doté d'un équivalent d'époxyde (EE) de 400 à 1 500 g/mole.

12. Dispersion selon l'une quelconque des revendications précédentes, **caractérisée en ce que** les composants de base sont présents en les proportions suivantes dans la dispersion, à chaque fois par rapport à la totalité des composants de base :
(A) 48 à 98,5 % en poids de polymère(s) de matrice,
(B) 1 à 44 % en poids d'époxyde(s),
(C) 0,5 à 8 % en poids d'adduit(s) de polyamine.

13. Dispersion selon l'une quelconque des revendications précédentes, comprenant en outre des agents adhésif sous forme dispersée, en particulier en une proportion allant jusqu'à 5 % en poids pour 100 parties en poids de composants de base.

14. Dispersion selon la revendication 12, **caractérisée en ce qu'**en tant qu'agent adhésif le 3-glycidoxypropyltriéthoxysilane est utilisé exclusivement ou en partie.

15. Dispersion selon l'une quelconque des revendications précédentes, comprenant en outre d'autres composants - comme des résines adhésives, des épaississants, des charges, des colorants, des agents adhésifs, des antimousses, des résines réactives différentes d'époxydes - sous forme dispersée.

16. Dispersion selon l'une quelconque des revendications précédentes, **caractérisée en ce que** la quantité des composants supplémentaires va jusqu'à 100 parties en poids pour 100 parties en poids des composants de base.

17. Dispersion selon l'une quelconque des revendications précédentes, **caractérisé en ce qu'**en tant que polymère de matrice un polyuréthane thermoplastique est utilisé.

18. Couche de masse adhésive pouvant être obtenue par revêtement d'une dispersion selon l'une quelconque des revendications précédentes et séchage ultérieur, en particulier jusqu'à une teneur en agent de dispersion résiduel de pas plus de 5 % en poids, par rapport à la couche de masse adhésive.
